# EUROPEAN PATENT SPECIFICATION

(11) **EP 1 107 516 B1**
(45) Date of publication and mention of the grant of the patent: **02.03.2005**
(21) Application number: 99850192.8
(22) Date of filing: 06.12.1999
(51) Int. Cl.: H04L 12/28, H04L 29/06

(54) **Methods and arrangements in a telecommunications system**
Verfahren und Anordnungen in einem Telekommunikationsnetz
Procédés et dispositifs dans un réseau de télécommunications

(43) Date of publication of application: 13.06.2001
(73) Proprietor: Telefonaktiebolaget LM Ericsson (publ), 164 83 Stockholm (SE)
(72) Inventor: Rune, Johan, 181 30 Lidingo (SE); Larsson, Tony, 113 54 Stockholm (SE); Johansson, Per, 124 30 Hägersten (SE); Gehrmann, Christian, 112 52 Stockholm (SE); Sorensen, Johan, 241 91 Eslöv (SE)
(74) Representative: Onshage, Anders Christer

(56) References cited:
- WO-A-95/30960
- WO-A-99/14897
- HAARTSEN J: "BLUETOOTH - THE UNIVERSAL RADIO INTERFACE FOR AD HOC, WIRELESS CONNECTIVITY" ERICSSON REVIEW,SE,ERICSSON. STOCKHOLM, no. 3, 1 January 1998 (1998-01-01), pages 110-117, XP000783249 ISSN: 0014-0171

## Description

### FIELD OF INVENTION

The present invention relates to a method and arrangement in a digital communication system constituting a network of multiple nodes. More specifically the present invention relates to a method and an arrangement for providing distribution within a Piconet using short range radio technology.

### DESCRIPTION OF RELATED ART

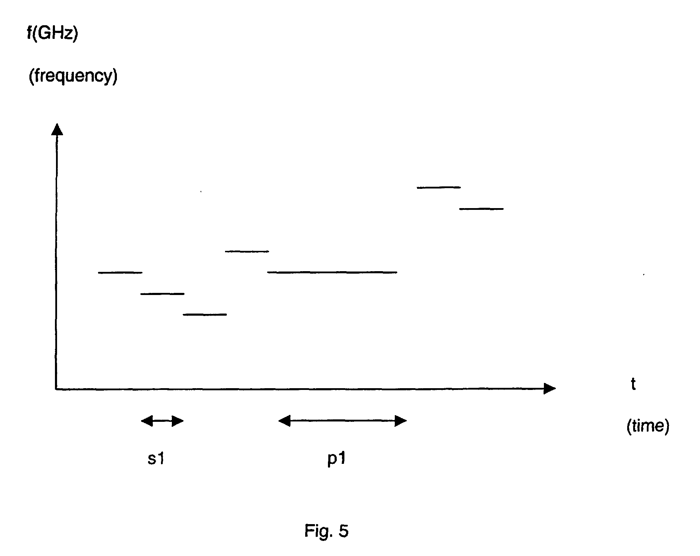

The Bluetooth interface is an example of a short-range radio interface, which was originally intended as a replacement for cables between electrical devices. The term Bluetooth is in this disclosure used as an example of usage of short-range radio communication. Printers, digital cameras, telephones, laptop computers, video monitors, electronic calendars (PDA), desktops, fax machines, keyboards, joysticks as well as ordinary computers and virtually any other digital device can be part of such a short-range radio system, i.e. any of these devices could have a Bluetooth radio chip and the software required therefore. But beyond untethering devices by replacing cables, short range radio communication can provide a universal bridge to existing data networks, as a peripheral interface. It can also be used to form small private ad hoc groupings of interconnected devices away from fixed network infrastructures or connected to a fixed network infrastructure via a gateway. The Bluetooth radio communication system is designed to operate in a noisy radio frequency environment and uses therefore a fast acknowledgement and frequency hopping scheme to make the links between the units in the system robust. Thus, Bluetooth radio modules avoid interference from other signals by hopping to a new frequency after transmitting or receiving a data packet, as is illustrated in Fig. 5. Compared to other systems operating in the same frequency band, the Bluetooth radio communication system typically hops faster and uses shorter data packets. This makes the Bluetooth radio communication system more robust than other systems. Use of Forward Error Correction (FEC) limits the impact of random noise on long-distance links between units in the system.

A Bluetooth radio communication system uses a frequency hopping scheme within the unlicensed ISM (Industrial, Scientific, Medical) band at 2.4 GHz. A frequency hop transceiver is used in the units to reduce the influence of interference and fading. A shaped, binary FM modulation scheme is used to minimize the complexity of the transceiver. The gross data rate is 1Mb/s and a TDD (Time-Division Duplex) scheme is used for full-duplex transmission.

The Bluetooth base band protocol is a combination of circuit and packet switching, as is shown in Fig. 5. In Fig. 5, sl denotes a single time slot, and p1 denotes a packet the transmission of which requires three time slots. The packets are normally transmitted using different hop frequencies. A packet is nominally transmitted in a single slot, but a single packet can require up to five slots. Bluetooth can support an asynchronous data channel, up to three simultaneous synchronous voice channels, or a channel, that simultaneously supports asynchronous data and synchronous voice. Each voice channel supports a 64 kb/s synchronous (voice) link. The asynchronous channel can support an asymmetric link of maximally 721 kb/s in either direction while permitting 57.6 kb/s in the return direction, or a 432.6 kb/s symmetric link.

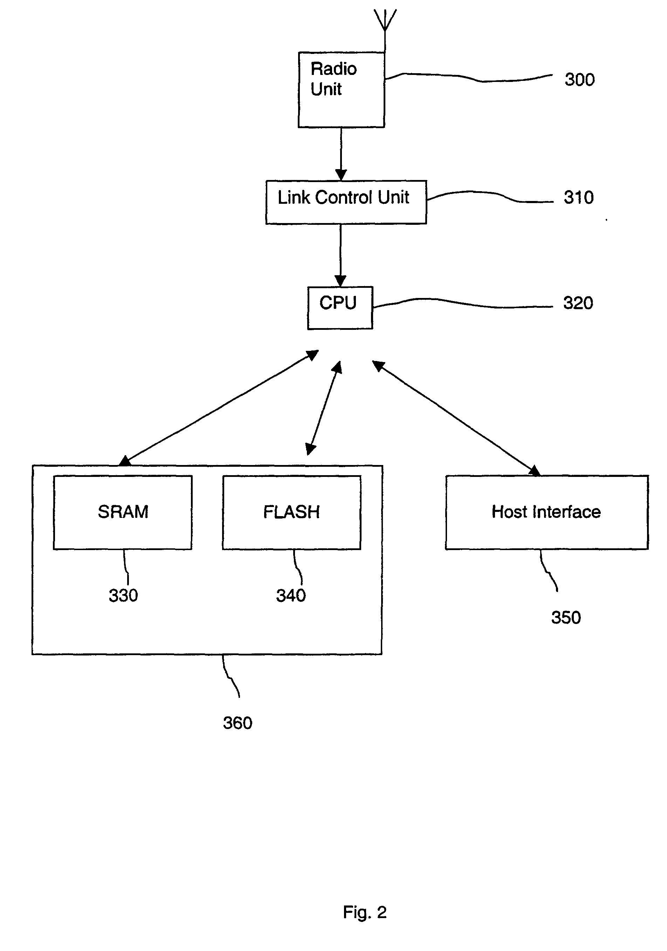

In Fig. 2, function blocks of a unit having a short-range radio transceiver, such as Bluetooth, are shown. A radio unit 300 provided with an antenna is connected to a link control unit 310 providing the base band. The link control unit 310 is connected to the Central Processing Unit, called CPU, 320 providing the link management. The CPU is connected to a memory 360 storing the software and consisting of two memory units: an SRAM 330 and a FLASH memory 340. The CPU 320 is connected to a host interface 350. An SRAM is a fast temporary memory. A FLASH memory is programmable ROM.

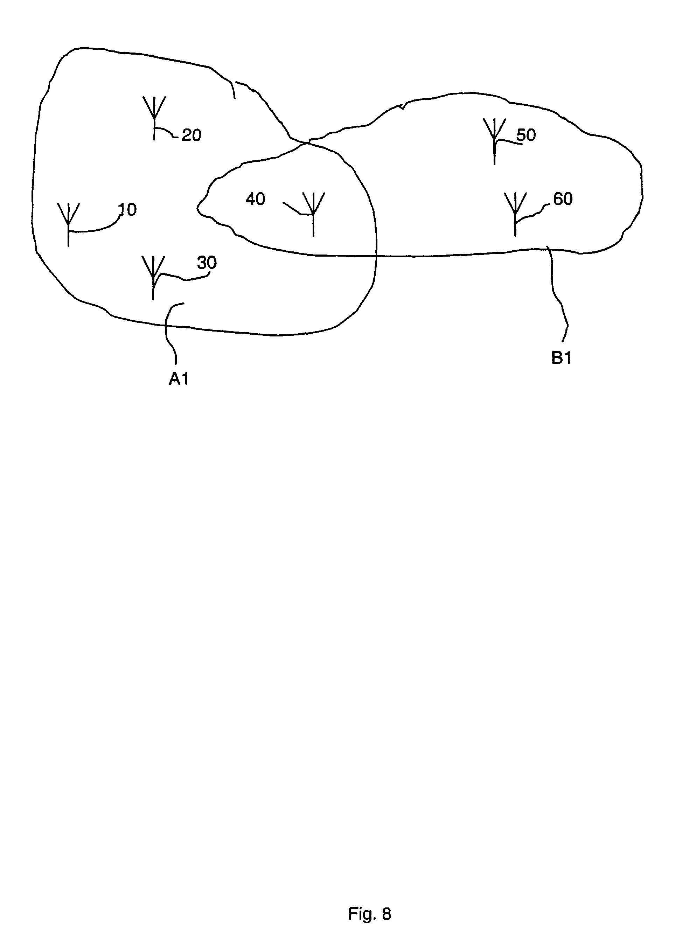

Fig. 8 shows two piconets A1 and B1 in a scatternet. The piconet A1 comprises four units 10, 20, 30, 40; and the piconet B1 comprises three units 40, 50 and 60. In the piconet A1, the unit 10 is a master unit. The unit 40 is a member of both piconet A1 and piconet B1. Two or more Bluetooth units (BT) using Bluetooth for communication with each other and sharing the same channel (i.e. the same frequency hop sequence and time slot synchronization) form a piconet, i.e. a piconet is a collection of units interconnected using Bluetooth in an ad hoc fashion. Within a piconet a Bluetooth unit can have either of two roles: it can be a master or a slave. Within each piconet there is one and only one master, and up to seven active slaves can be connected, i.e. a piconet starts with two interconnected units, such as portable PC and a cellular telephone, and it may grow to eight interconnected units. All Bluetooth units are peer units and basically have identical implementations. Any BT unit can become the master in a piconet. However, when a piconet is being formed, one unit will take the role of the master and the other(s) will be slave(s) for the duration of the piconet. A scatternet, or an ad hoc network, is a network comprising multiple independent and non-synchronized piconets. The master or master unit is the unit in a piconet the clock and hopping sequence of which are used to synchronize all other units in the piconet. A slave or slave unit is every unit in a piconet that is not the master in the piconet. Two or more piconets can be interconnected, forming a scatternet as has already been defined. The connection point between two piconets consists of a single BT unit that is a member of both piconets. A BT unit can simultaneously be a slave of a plurality of piconets, but only master in one piconet. I.e., a BT unit functioning as master in one piconet can act as a slave in another piconet or piconets. A BT unit can only transmit and receive data in one piconet at a time, so participation in multiple piconets has to be on a time division multiplex basis. The Bluetooth system supports both point-to-point and point-to-multi-point connections. Several piconets can be linked together ad hoc, where each piconet is identified by a different frequency hopping sequence. All units participating in a same piconet are synchronized to the hopping sequence of the piconet. The scatternet topology can best be described as a multiple piconet structure, see Fig. 8. However, Bluetooth units for use in scatternets are not yet commercially available.

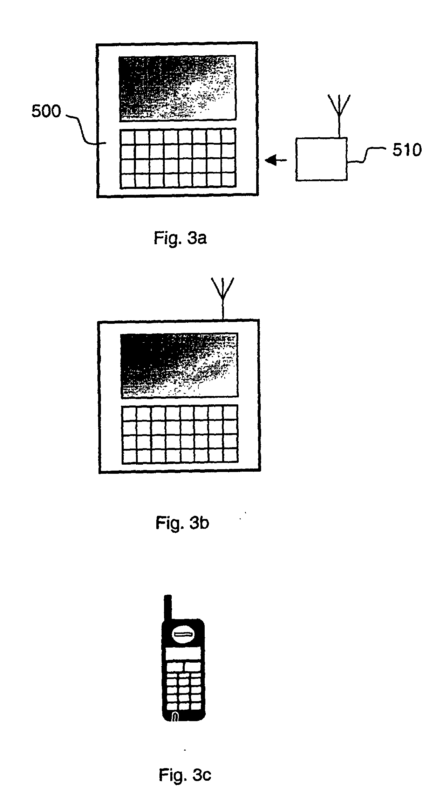

Fig. 3a shows a Personal Digital Assistant PDA 500 utilizing an "add-on" Bluetooth communication device 510. The Bluetooth communication unit 510, which is provided with an antenna, is inserted in a slot in the PDA. The Bluetooth communication unit may be a PC-card or a compact flashcard provided with a Bluetooth chipset.

Fig. 3b shows a PDA utilizing a "built-in" Bluetooth communication device. Here, the PDA is provided with an antenna.

Fig. 3c shows a mobile telephone utilizing a "built-in" Bluetooth communication device, the Bluetooth transceiver having an antenna, not shown, different from that of the mobile telephone.

A Bluetooth system provides, as already told, full-duplex transmission built on slotted Time Division Duplex (TDD). Each slot used has a length of 0.625 ms. The time slots are numbered sequentially using a very large number range (the range is cyclic having a cycle of 2²⁷). Transmission from master to slave always starts in an even-numbered time slot whereas transmission from slave to master always starts in an odd-numbered time slot. The term "frame" as used here is defined as the combination of an even numbered time slot and the subsequent odd numbered time slot (i.e. a master-to-slave time slot and a slave-to-master time slot), except when multi-slot packets are used, and then other conventions are used. In a communication system using Bluetooth no direct transmission exists between slaves in a piconet.

The communication between the units of a piconet is organized such that the master polls each slave according to some polling scheme. With one exception a slave is only allowed to transmit after having been polled by the master. The slave will then start its transmission in the slave-to-master time slot immediately following the packet received from the master. The master may or may not include data, e.g. payload data, in the packets used to poll the slave. The only exception to the above principle is that when a slave has an established SCO (Synchronous Connection-Oriented) link to the master, it is always allowed to transmit in a pre-allocated slave-to-master slot, even if not explicitly polled by the master in the directly preceding master-to slave slot. SCO links support real time voice traffic using reserved bandwidth.

Each BT unit has a globally unique 48 bit address. This address, the Bluetooth Device Address (BD_{_}ADDR) is assigned when the BT unit is manufactured and it is never changed. In addition thereto, the master of a piconet assigns a local Active Member Address (AM_{_}ADDR) to each active slave of the piconet. The AM_{_}ADDR is only three bits long and is unique only within a single piconet. The master uses the AM_{_}ADDR when polling a slave in a piconet. When the slave, triggered by a packet received from the master and addressed using the AM_ADDR of the slave, transmits a packet to the master, it includes its own AM_ADDR in the header of the packet.

The packets can carry both synchronous data, on Synchronous Connection Oriented (SCO) links, and asynchronous data, on Asynchronous Connection-Less (ACL) links. For some types of packet used, an acknowledgment and retransmission scheme is used to ensure reliable transfer of data. Such a scheme is not used for SCO packets transferring synchronous data. Also forward error correction (FEC) in the form of channel coding can be used.

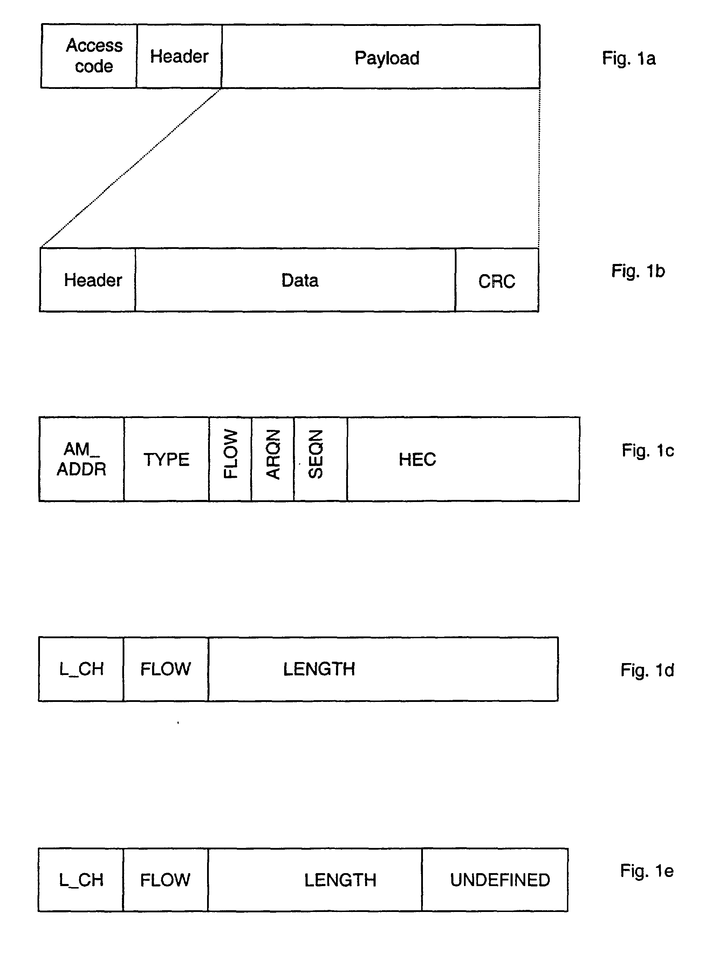

The standard format of a Bluetooth Baseband packet is shown in Fig. 1a. It comprises a field for an access Code, a header field and a payload field. The Fig. 1c illustrates the format of the header field, which comprises an AM_ADDR field, followed by a TYPE field, indicating the type of packet. The FLOW field encompasses one bit used for flow control. The fields ARQN and SEQN control the acknowledgement and retransmission scheme. The Header Error check (HEC) field has information for checking the integrity of the header. In receiving a packet and using the information in the HEC field for checking the header field. The header field can be found to be in error and then the packet is discarded. Otherwise the packet is retained and further checks can be made. The format of the payload depends on the type of packet being transferred. An SCO packet is a packet transported on an SCO link and an ACL packet is a packet transferred on an ACL link. The payload field of a SCO packet comprises only a data field. The payload of an ACL packet, which is shown in Fig. 1b, comprises a header field, a data field and, a field carrying information for cyclic redundancy check (CRC). In addition, there are hybrid packet including two data fields, one for synchronous data and one for asynchronous data. Hybrid packets are used when voice information and data are transmitted over the same link. Packets having a payload field and not provided with a CRC field are neither acknowledged nor retransmitted. There are two different formats of the payload header field. In Fig. 1d the format of the payload header field for single-slot packets is illustrated. In Fig. 1e is illustrated the format of the payload header field for multi-slot packets. L_CH is a two bit field indicating the type of payload. L_CH=00 means that the "00" value is undefined, and will therefore not be used. L_CH=01 indicates a continuation fragment of an L2CAP message to be described below. L_CH=01 indicates the start of a L2CAP message or no fragmentation. Fragmentation means that the L2CAP packet is to large to be carried by a single Basband packet and therefore it has been split into multiple parts, so-called fragments, each fragment being carried by a single Baseband packet. At the destination node the fragments are reassembled into a complete L2CAP packet. L_CH=11 indicates an LMP message. The FLOW field is used for flow control. The FLOW bit in the header field is used for flow control at the L2CAP level. FLOW=0 indicates "stop transmission". FLOW=1 indicates "ready for transmission". The FLOW bit in the last correctly received payload header determines the flow status. The LENGTH field indicates the length of the data field. Since multi-slot packets can carry a longer data field, the LENGTH field of the multi-slot payload header (Fig. 1e) is longer (not shown in the figure) than the LENGTH field of the single-slot payload header (Fig. 1d). As is shown in Fig. 1e, the payload header field of a multi-slot packet, the four last bits are undefined.

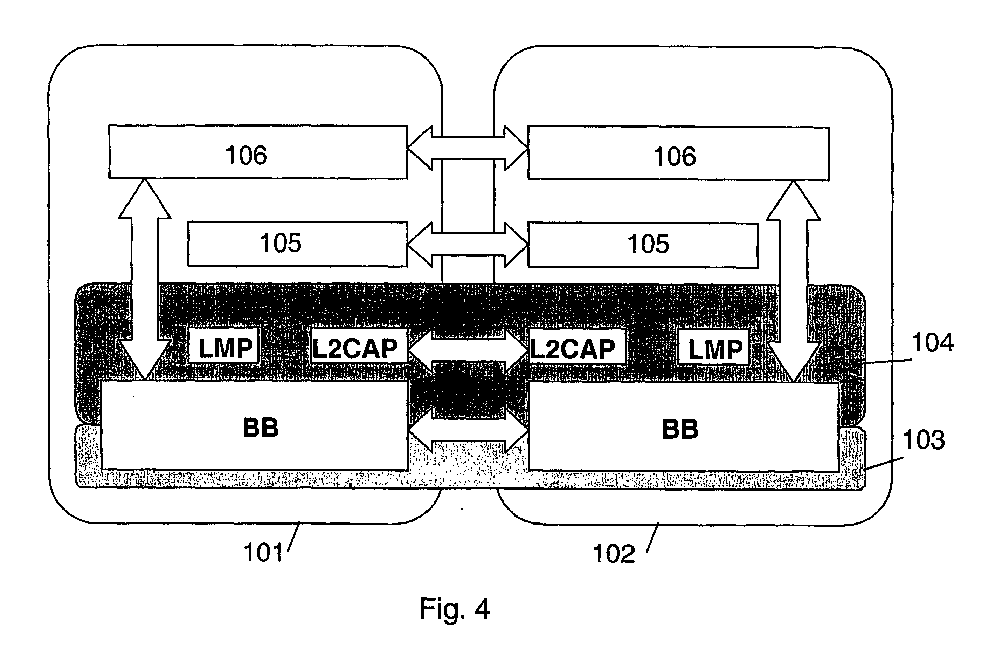

In a Bluetooth system a few protocol layers are used which are illustrated in Fig. 4 and comprise the Baseband (BB), protocol between the physical layer 103 and the data link layer 104, the Link Manager Protocol (LMP) and the Logical Link Control and Adaptation Layer Protocol (L2CAP)in the data link layer 104. Also a "High level protocol or application" layer (106) may or may not be provided as well as a Network layer (105) is. In addition, a Network Adaptation Layer (NAL), not shown, residing between the data link layer (104) and the network layer (105) can be provided.

Now the Bluetooth protocol stack will be described with reference to Fig. 4. In Fig. 4 two Bluetooth units are depicted: a unit Nr. 1, 101, and unit Nr. 2, 102.

The BaseBand BB protocol describes the specifications of the digital signal processing part of the hardware - the Bluetooth link controller, which carries the Baseband protocols and other low-level link routines. It uses two link types: Synchronous Connection-Oriented (SCO) links and Asynchronous Connection-Less (ACL) links. The Link Management Protocol LMP handles messages used for link set-up, security and control. The LMP is located above the Baseband Protocol.

The Logical Link Control and Adaptation layer Protocol L2CAP is also located over the Baseband Protocol. L2CAP provides connection-oriented and connectionless data services to upper layer protocols with protocol multiplexing capability, segmentation, reassemble operation, and group abstractions. The L2CAP is defined only for ACL links.

As previously stated, physical transmission in a piconet is allowed exclusively between the master and each slave, and vice-versa. Thus, there is no way for a slave to send data to another slave in a piconet, since direct communication is not allowed.

In a Bluetooth system there is no way specified to address and route packets from one piconet to another. However, a BT unit, which is a member of more than one piconet can be used to forward packets from one piconet to another. Such a BT unit is herein called a "forwarding node".

In order to allow slave-to-slave communication in a piconet and inter-piconet communication. One piece of important information is a slave, which is to send a message to another slave in a piconet, e.g. the address, such as BD_ADDR of each of the other members of piconet. This information is normally only known by the master unit in a piconet. Another example of important information can be whether a receiving BT unit supports slave-to-slave communication.

Nokia has proposed to the Bluetooth SIG (Special Interest Group), the organization writing the Bluetooth standard, a new method enabling inter-piconet routing in a scatternet as well as intra-piconet routing between slaves within the same piconet. In the Nokia proposal a protocol layer called Virtual Network Segment (VNS) is inserted between the L2CAP and the Network layer 104, see Fig. 4, in order to emulate a shared medium network, i.e. a broadcast medium, to the Network layer, i.e. the VNS layer serves the same purpose as the NAL layer. The VNS entity in a forwarding node will register itself in the master unit by sending a message to its peer entity in the master unit. In the transfer of messages slave units use the knowledge of the master. When a slave unit wants to send a message to a forwarding node, e.g. a request to create a route to a specific destination in another piconet, it sends the message to the master unit. The master unit will then forward the message to the appropriate forwarding node(s) based on its retained information.

Another example arising from Bluetooth Core Specification 1.0, (i.e. Specification of the Bluetooth system; Core; Specification Volume 1:1, version 1.0) relates to the compatibility between different BT units. When two BT units communicate over a direct wireless link, i.e. not slave-to-slave communication via the master unit, the compatibility problem is solved by exchanging lists of features including indications for each feature whether it is supported or not. This information exchange is performed using the LMP PDU (Protocol data Unit), LMP_features_req and LMP_features_res. A message in the Link Manager Protocol (LMP) is called "LMP PDU", PDU standing for "Protocol Data Unit". LMP_features_req and LMP_features_res indicate two LMP PDU according to the Bluetooth Core Specification 1.0. In fact, before this information exchange is performed a BT unit is allowed to use only a small subset of the Bluetooth features, e.g. packet types, when communicating with the other BT unit. After the information exchange has occurred the intersection of the supported features in the two BT units may be used. The information being exchanged using LMP_features_req and LMP_features_res is a list of Bluetooth features and a bit for each feature. The bit indicates whether the feature is supported or not, see page 235-236 in the Bluetooth Core Specification Volume 1:1.

Patent document WO 9914897 discloses a system and a method by which wireless nodes of an ad-hoc network send their own addresses and addresses of their reachable neighbours to a master node.

### SUMMARY OF THE INVENTION

The Problems discussed in the present disclosure are the following:
- The VNS approach deals with only a small part of the general distribution of information.
- Regarding the LMP procedure for exchange of lists of supported features, this is limited to BT units communicating over a direct link, i.e. a master unit and a slave unit communicating with each other. The compatibility issues arising when slave-to-slave communication is considered are not addressed.
- When slave-to-slave communication within a piconet is introduced, a problem is that neither the AM_ADDR nor the BD_ADDR, or a possible IP address, of other slave units in said piconet are available for a slave unit in said piconet.

Since Bluetooth is the main target of the invention, the method and arrangement as disclosed herein is described in a Bluetooth context using Bluetooth terminology. The term "Bluetooth" is a registered trademark denomination of a short-range radio transceiver and the communication system using such a transceiver. A man skilled in the art understands that other types of short range communication may be used, e.g. infrared light, the devices in such a system being provided with means for communication by infrared light. Further types of short-range communication may be ultrasonic or hydrophonic communication. Furthermore, the invention can be applicable. to other network technologies, both wired and wireless.

Thus a target system is considered which is a digital, wired or wireless, communication system constituting a network of multiple nodes. The network comprises a central node, also called master and two or more peripheral nodes, also called slaves or slave units. The central node controls all the communication in the network. On the lowest protocol layer, the physical layer, all the communication flows exclusively between the central node and a peripheral node or vice versa. No communication, on the lowest protocol layer, goes directly between two peripheral nodes. In such a system, information related to the system itself or to the nodes in the system can be distributed by the central node among the peripheral nodes in the network or kept in a database in the central node, which database is accessible on request from the peripheral nodes in the network. The information can be conveyed to the central node from the peripheral nodes, either commanded by the central node itself or on request from a peripheral node, triggered by an internal event in the peripheral node, e.g. a change of state having external consequences. The distributed information can comprise:
- Number of peripheral nodes
- Addresses of peripheral nodes
- IP addresses of all nodes
- Associations between an IP address and a low layer address (e.g. Medium Access Control MAC address) for a peripheral node or for all nodes
- Addresses of forwarding nodes
- Supported features of peripheral nodes
- State changes in peripheral nodes (e.g. when a node becomes or ceases to be a forwarding node)
- Forwarding bit rate capacity of forwarding nodes
- Notifications when nodes join or leave the network
- Notifications when a connection to a fixed infrastructure becomes available or ceases to be available
- Notifications of other events
- Information related to forwarding policy

Furthermore, it should be noted that the methods to be used in a Bluetooth system are not limited to the type of information mentioned in conjunction with the mechanisms. Any type of information related to the system of the individual nodes could be managed using any of the described mechanisms. Such information may be the above listed information and can contain:
- AM_ADDR of slaves
- BD_ADDR of slaves
- IP address of slaves
- Inter-piconet scheduling parameters for forwarding nodes

Thus, to overcome the above described problems and to provide a generally viable solution a piconet must include an efficient mechanism to make all the relevant information available to all slave units in a timely manner. This can be achieved in different ways. Although different types of information will be described in conjunction with different mechanisms, the distribution of all the different types of information could be handled by a common protocol, but separate protocols are also feasible. It is also possible to use different protocols for the same information in different situations.

The purpose of the invention is to provide mechanisms for efficient distribution of relevant information in a piconet

In a system using Bluetooth technology, an advantage of the herein disclosed method and arrangement is that slave-to-slave communication is facilitated, since distribution of useful system or node related information in a piconet is enabled. When slave-to-slave communication is enabled it is no longer enough that the master unit is informed of relevant information regarding the slave units. Useful information can be e.g.:
- Address information related to the member units in a piconet, including notifications when BT units join or leave the piconet.
- Forwarding node information, which also facilitates inter-piconet communication.
- Compatibility related information.

In a system using Bluetooth technology, a further advantage of the herein disclosed method and arrangement is that slave-to-slave LMP PDU also facilitates slave-to-slave communication.

In a mobile telecommunication constituting a network of multiple nodes, comprising a central node and at least two peripheral nodes, where the central node control all the communication in the network, an advantage of the herein disclosed method and arrangement is that communication between peripheral nodes, via the central node, is facilitated, since relevant information related to the system and the individual nodes can be distributed among the peripheral nodes. The information may be any of the above listed.

The term "comprises/comprising" when used in this specification is taken to specify the presence of stated features, integers, steps or components but does not preclude the presence or addition of one or more other features, integers, steps, components or groups thereof.

Further scope of applicability of the present invention will become apparent from the detailed description given hereinafter. However, it should be understood that the detailed description and specific examples, while indicating preferred embodiments of the invention, are given by way of illustration only, since various changes and modifications within the scope of the appended claims, will become apparent to those skilled in the art from this detailed description.

### BRIEF DESCRIPTION OF THE DRAWINGS

- Figure 1a: is a diagram illustrating a standard base band packet format.
- Figure 1b: is a diagram illustrating the format of an ACL packet.
- Figure 1c: is a diagram illustrating a base band packet header.
- Figure 1d: is a diagram illustrating a base band payload header for a singe slot packet.
- Figure 1e: is a diagram illustrating a base band payload header for a multi slot packet.
- Figure 2: is a schematic view illustrating a Bluetooth transceiver.
- Figures 3a-c: are schematic views of three electronic devices provided with a Bluetooth transceiver.
- Figure 4: is a diagram illustrating the Bluetooth protocol layers.
- Figure 5: is a diagram showing the relationship between time slots and frequency hops in a system using Bluetooth.
- Figure 6: is a diagram illustrating a forwarding scenario.
- Figure 7a-7c: are diagram illustrating the Baseband packet format.
- Figure 8: is a schematic view of two piconets in a scatternet.
- Figure 9: is a flowchart illustrating the routing of a packet.
- Figure 10: is a diagram illustrating a Bluetooth unit.
- Figure 11: is a flowchart illustrating the process of a Bluetooth unit becoming a forwarding node.
- Figures 12a,b: are flowcharts illustrating an example of a process when a Bluetooth unit becomes a forwarding node.
- Figures 13a,b: are flowcharts illustrating an other example of a process when a Bluetooth unit becomes a forwarding node.
- Figure 14: is a flowchart illustrating the process of a forwarding node ceasing to be a forwarding node and the information flow in a first piconet.
- Figures 15a,b: are flowcharts illustrating the process of a forwarding node ceasing to be a forwarding node and the information flow in a second piconet.

The invention will now be described in more detail with reference to preferred exemplifying embodiments thereof and also with reference to the accompanying drawings.

### DETAILED DESCRIPTION

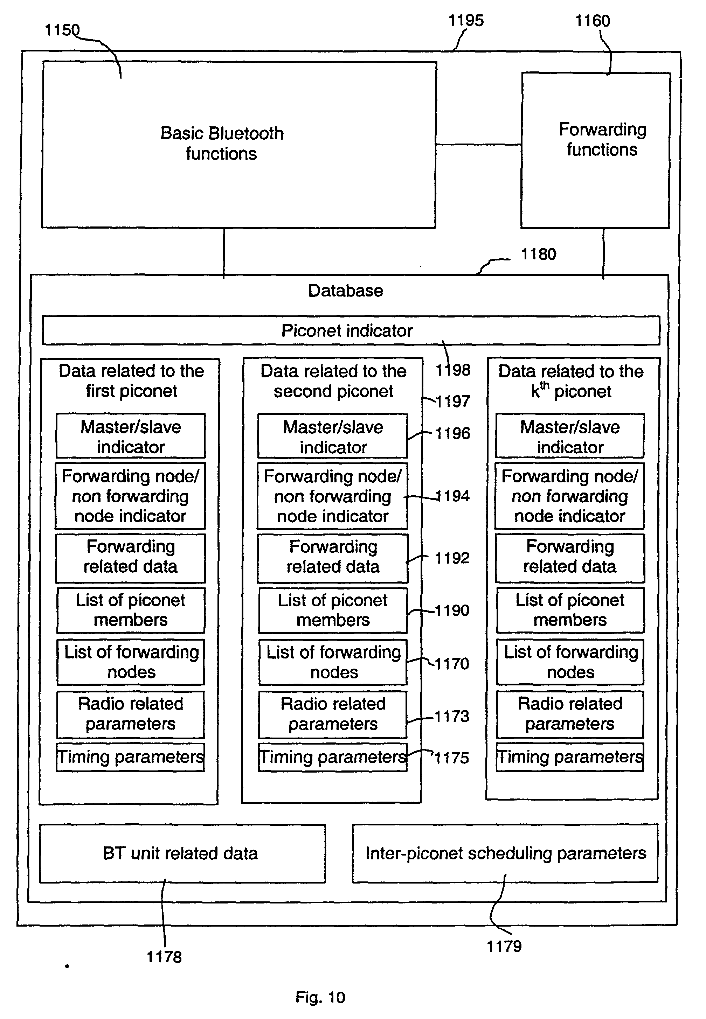

The internal logical structure of a Bluetooth unit having an enhanced communication capability appears from Fig. 10. The Bluetooth unit 1195 comprises basic Bluetooth functions 1150, forwarding functions 1160 and a database 1180. The block basic Bluetooth functions 1150 comprises the functions performed by a transceiver, a clock, a memory, a power source, logic circuits for implementing the Bluetooth protocol stack, logic circuits for analyzing signaling messages and logic circuits for generating signaling messages, etc. The block forwarding functions 1160 comprises the functions performed by forwarding logic circuits, i.e. logic circuits to receive a packet in a first piconet, logic circuits to analyze the routing and address information located in said packet and logic circuits for transmitting a packet to a second piconet, etc. The block database 1180 comprises a physical memory for storing data, a piconet indicator 1198, blocks 1197 provided with data related to each piconet in which the BT unit is currently a member, a block 1179 comprising inter-piconet scheduling parameters, a block 1178 comprising BT unit related data. The block 1198 comprising a piconet indicator includes a data unit indicating the piconet, if any, in which the BT unit is currently active, i.e. which set of piconet related data that is currently valid. The block 1179 "Inter-piconet scheduling parameters" include timing parameters governing when the BT unit is to be active in each piconet, i.e. when to switch from one set of piconet related data (in particular the radio related parameters 1173 and the timing parameters 1175) to another. The block 1178 "BT unit related data" includes data related to the BT unit irrespective of the piconet to which the BT unit is located e.g. Battery status, user interface options, data entered by the user. The blocks 1197 "Data related to the k^{th} piconet" comprises a block 1196 "master/slave indicator", a block 1194 "forwarding node/non-forwarding indicator", a block 1192 "forwarding related data", a block 1190 "list of piconet members", i.e. Bluetooth units that are connected to the piconet, a block 1170 "list of forwarding nodes in the piconet", a block 1173 "radio related parameters", and other piconet related data. The block 1196 "master/slave indicator includes a data unit indicating whether the BT unit is a master or a slave in the piconet. The block 1194 "forwarding node/non-forwarding node indicator" includes a data unit indicating whether the BT unit is a forwarding node or not in the piconet. The block 1192 "forwarding related data" includes data necessar to perform forwarding of data from one piconet to another, e.g. list of piconet being currently interconnected. The block 1173 "radio related parameters" comprises frequency hop sequence and currently used transmitter power, The block 1175 "timing parameters" include an estimate of the clock value of the master unit. The block 1170 list of forwarding nodes comprises a data record of each forwarding node in the piconet, each data record comprising at least
- The AM_ADDR of the forwarding node
- The BD_ADDR of the forwarding node

The block 1190 list of piconet members comprises
- A data record of each member unit of the piconet, except in some cases the Bluetooth unit itself, each record comprising
- The AM_ADDR of the Bluetooth unit
- The BD_ADDR of the Bluetooth unit
- Other optional information about the Bluetooth unit, e.g. compatibility information

In order to allow that information is transferred from one slave to another slave in a piconet the information on the members of the piconet must be distributed to all members of the piconet. Thus, when a source slave unit is to transfer information to another slave unit the source slave must have access to the address of the other slave unit. This address could be the BD_ADDR or the AM_ADDR or some other address used on a higher layer, e.g. the IP address. The best choice of address depends on the addressing scheme used in the piconet. A combination of several addresses could sometimes also be used to allow translation between addresses, e.g. between an IP address and a BD_ADDR and/or between a BD_ADDR and an AM_ADDR.

Thus, e.g. the AM_ADDR and the BD_ADDR of all slaves should be made available to all slaves.

When transferring information between slaves in a piconet the routing is performed using the Baseband layer protocol, thereby eliminating the need to traverse all the protocol layers up to the network layer 105 or a NAL layer. The packets containing the information to be transferred can be called Baseband Packets and they are transferred from a first slave, via the master, to a second slave. The first slave obtains the address of the second slave from the master, inserts it in a header field of the Baseband packets and transmits them to the master. The master analyses the address in the header and forwards the packet to the second slave according to the address. Furthermore, when AM_ADDR is used addressing, the data overhead represented by a higher layer destination address (e.g. an IP address on the IP layer or a BD_ADDR on the NAL layer) is completely eliminated.

To make the presence of a new member, and the relevant address(es) of this new member, known to the other slave units in the piconet as soon as possible, it is preferable that the master unit distributes the address information of the new slave unit as soon as the new slave unit has been connected to the master. The master unit should also inform the new slave unit of the slave units being already present in the piconet, by transferring the relevant information and in particular the address information for all the already existing slave units. Similarly, the master unit informs all the other slave units in the piconet, when a slave unit leaves the piconet. When a slave unit leaves the piconet it is detected explicitly or implicitly by time-out due to loss of radio contact. An alternative distributing mechanism is that the master periodically distributes the address information of all the slave units in the piconet. Of course, it is also possible to combine "event triggered" the time driven distribution of information.

The distribution mechanism could be either broadcasting to all the piconet members at once, although the Bluetooth intra-piconet broadcast mechanism is not reliable, since the messages are not acknowledged, or unicast from the master unit to each slave unit, one at a time. If the address information of all the slave units is periodically unicast to each slave unit, the address information of the slave unit receiving the information should of course be excluded from the message. The protocol to be used could be LMP (including new PDUs) or a VNS layer protocol. There are also other proposals of adaptation layers between L2CAP and the Network layer, e.g. called Network Adaptation Layer (NAL), which could also include this protocol. Other protocols may also be used for this purpose.

A BT unit can only transmit and receive data in one piconet at a time, so participation in multiple piconets has to be on a time division multiplex basis. The time spent in each piconet is governed by a scheduling algorithm. This algorithm could be designed in various ways according to different principles, e.g. fixed round robin, negotiation between a slave unit and a master unit (when applicable), dynamically assigned time windows (by the master of a piconet based on the current traffic, etc. When a BT unit switches from one piconet to another, it has to start using another set of piconet related data, as shown in fig. 10. In particular, the radio related parameters, e.g. the frequency hop sequence, and the timing parameters, e.g. the clock value of the master of the piconet, have to be switched in order for the Bluetooth unit to be able to communicate in the new piconet. In fig. 10 different sets of piconet related data in a BT unit are illustrated, as well as a piconet indicator indicating which of the sets of piconet related data that is currently valid.

To allow inter-piconet communication, the address of each forwarding node that is present in the piconet must also be distributed. This address could be AM_ADDR, the BD_ADDR, an IP address or even a VNS or NAL specific address, or similar address. In the same way as for general address information of a slave member, also in this case, any combination of these addresses could be useful depending on the addressing and routing mechanisms used in the piconet and the scatternet, and the independent use of the address information. Distribution of forwarding node information could be handled separately or in conjunction with the distribution of the general address information of all the slave units in the piconet. If provided in conjunction with the distribution of address information, there could be an indicator for each slave unit indicating whether it is a forwarding node or not. When forwarding node information is considered, this concerns the master too, since the master may also be a forwarding node. If the forwarding node information is distributed along with the slave unit address information, and the master unit happens to be a forwarding node, this status of the master unit has to be added to the information of the slave units.

Even if the forwarding node information is included in the distribution of slave unit address information, it must still be possible to distribute forwarding node information separately if event triggered distribution is used. When a BT unit becomes a forwarding node, the other members of the piconet must be informed. Likewise, when a BT unit ceases to be a forwarding node, the other piconet members should be informed. This information could be broadcast or unicast by the master unit to the other slave units, but first the concerned BT unit, i.e. the unit that become or cease to be a forwarding node, must inform the master unit. This is preferably done via messages on the VNS layer or NAL layer, or a similar layer, but the messages could also be carried by new LMP PDUs or by another protocol.

In a further embodiment, the BT unit that has changed its forwarding status, from not being a forwarding node to being one or vice versa, notifies the other piconet members directly via slave-to-slave communication.

In order to attend to the compatibility problem in slave-to-slave communication within a piconet, the master unit could simply distribute the list of supported, and unsupported, features for a certain slave unit together with the address information for the concerned slave unit. The list of features should first be obtained from the new slave unit by the master unit via the LMP_features_req LMP_features_res procedure, although the list of features must be extended to cover e.g. support for the shared medium emulation layer, e.g. the NAL layer, if used, forwarding capability, support for slave-to-slave intra-piconet communication, etc. Changes in the list of supported features in already existing piconet members should also be communicated to the other piconet members. This could be done by first informing the master unit, unless the concerned unit itself is the master unit, which then distributes it to the other slave units using broadcast or multiple unicast messages. An alternative is that the concerned slave unit distributes the new list of supported, and unsupported, features, or possibly just the modifications of the old list, to the other slaves using slave-to-slave communication and to the master unit using slave-to-master unicast.

In a yet further method for providing useful information, i.e. any of the above mentioned types of information and possibly other useful information, to all the member units of a piconet is to store all the information in the master unit, e.g. a database, and making said information accessible on request from the slave units. A slave unit would then be able to request all the information in the database of the master or a relevant subset of said information from the master. A relevant subset would e.g. be all address information, all forwarding node information, or address information for a selected unit.

The request and response could be carried by LMP or a specifically designated protocol or by different protocols, depending on the type of information that is requested.

Before a slave unit can request any information from the master unit, the relevant information must be conveyed from the slave units to the master unit. This could be done on request from the master unit or transmitted from a slave unit triggered by an internal event in the slave unit, e.g. a switch from being a forwarding node to not being one. Such a "master unit database" method may be used as a stand-alone solution or as a back up mechanism for any of the distribution mechanisms described above.

In another embodiment, a method for attending to compatibility problems during slave-to-slave communication is to allow the LMP_features_req and LMP_features_res PDU to go slave-to-slave, i.e. essentially traversing two hops within a piconet. This method requires that both the involved slave units support slave-to-slave communication, but also other information of the support of other features, e.g. support of a the modified Baseband packet header format described in the simultaneously filed patent application (Method, node and arrangement in a communication network) and discussed in more detail in conjunction with Fig. 1a-e.

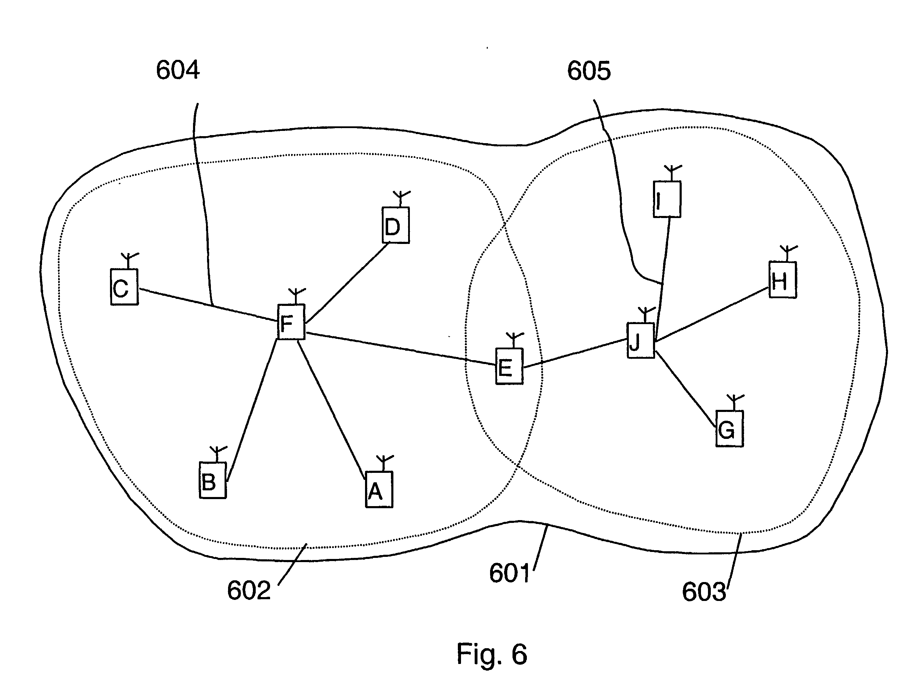

In Fig. 6 a Bluetooth network or scatternet 601 is illustrated comprising two piconets. The first piconet 602 comprises multiple nodes A, B, C, D, E and F, the node F being the master and the other nodes A, B, C, D, E being slaves. The second piconet 603 comprises multiple nodes E, G, H, I and J, the node J being the master, and the other nodes E, G, H and I being slaves. The respective slaves A, B, C, D and E communicate with the master F over radio links 604. The respective slaves E, G, H and I are communicating with the master J over radio links 605. The unit E is a slave in both the first piconet 602 and in the second piconet 603 and acts as a forwarding node, when transferring packets between the first piconet 602 and the second piconet 603. The Bluetooth network 601 thus comprises two masters F and J and one forwarding node E. Within the network, a Baseband packet is transferred, the Baseband packet having a header, as shown in Figs. 1a and 1b. The master F controls all the communication within the first piconet 602 and the master J controls all the communication within the second piconet 603. A packet, also called a Baseband packet as in slave-to-slave communication, may be routed from a first node A in the first piconet via the master F, the forwarding node E and the master J, to a second node G in the second piconet. To perform the transmission of the packet, a route is created between the first node A and the second node G, each packet being sent along the route comprising routing information, originating from the Network layer or NAL layer. When a routing protocol called AODV (Ad-Hoc On demand Distance Vector) is used, the routing information is the address of the destination node, in this case that of the second node G. When a routing protocol called Dynamic Source Routing is used, the routing information comprises the address of each node to be traversed along the route and the destination address, which in this case comprise the addresses of the nodes F, E, J and G. In order to perform the packet transmission using the Baseband protocol in the physical layer, the routing information is placed in a header of a lower protocol, i.e. in the payload header field implying a short-circuiting of both the Baseband payload sublayer and the L2CAP layer. The term short-circuiting a protocol layer as used herein means that the forwarding node and the master node does not have to unpack and analyze the information of said protocol layer, in order to forward the packet.

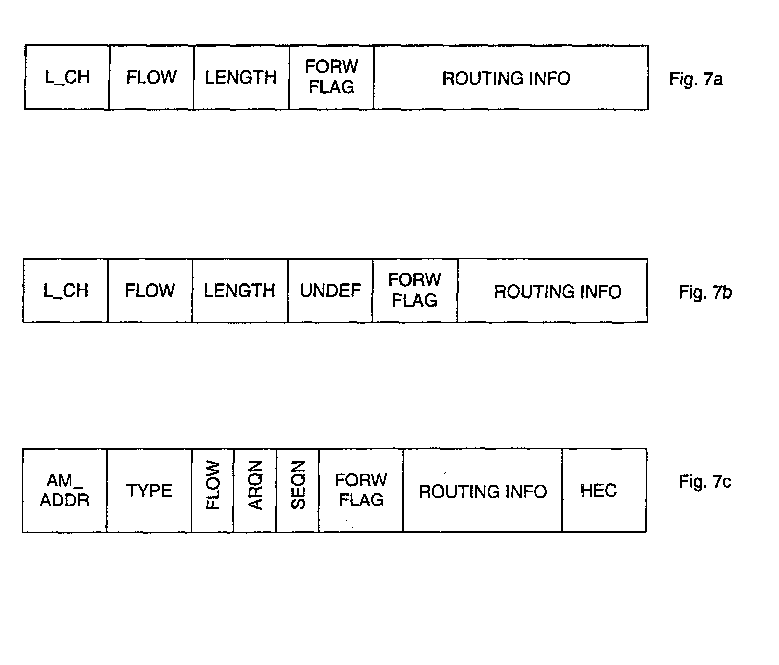

In Fig. 7c a diagram of the Baseband packet header format is shown. In Fig. 7a the payload header format of a Baseband packet for single slot packets is shown. In Fig. 7b a diagram of the format for Baseband packets of multi-slot type is shown. The headers shown in Fig. 7a-c are, relatively the headers depicted in Fig. 1c-e, enlarged by a forwarding indicator field FORW IND and a relevant routing indicator field ROUTING INFO. The forwarding indicator instructs a forwarding node that it should send the packets to the upper layer protocols, when the forwarding indicator is not set, e.g. FORW IND=0, or that it should invoke a forwarding process within the lower layer, when the forwarding indicator is set, e.g. FORW IND=1. The setting of the forwarding indicator also indicates that it is followed by the address information that is required to forward the packet. If the forwarding indicator is not set, no routing information is included. Alternatively, the routing information may be included, indicating to the receiving node that said receiving node is the destination node and thus that the packet is to be sent to upper layer protocols. This low level routing method may be used for data packets being sent along an already established route. The message that was used to create the route in the first place, e.g. NAL or a Network layer message, cannot use the procedure as described herein.

Now, packet transmission the network layer, the packet may be much larger than in the physical layer. The NAL or Network layer packets will probably fit into a single L2CAP packet, but the L2CAP packets may often have to be segmented before they are transferred in multiple Baseband packets. The fact that the routing information is included in every Baseband packet, instead of only in the NAL or Network layer packet, increases the overhead. In one embodiment, a L2CAP packet is segmented into multiple Baseband packets to be transmitted, wherein a first Baseband packet comprises the first segment of the L2CAP packet, and the subsequent Baseband packets comprise the respective subsequent segments of the L2CAP packet. In a further embodiment, the forwarding indicator is set, and routing information is inserted in the first and the subsequent Baseband packets.

In a yet further embodiment, the forwarding indicator is set and the routing information is inserted only in the first Baseband packet, but in the subsequent Baseband packets no routing information is included. In this case, the forwarding indicator within the first Baseband packet also instructs the forwarding node E and the masters F and J (as shown in Fig. 6) to store the routing information of the first Baseband packet and associate the routing information with the incoming link, i.e. the link on which the first Baseband packet is received by the forwarding node E and on which also the subsequent Baseband packets will be received by the forwarding node E. The forwarding indicator has to be complemented with yet a one-bit indicator, which is called Routing Information Indicator (RII). The RII is set only when the forwarding indicator is set. The purpose of the RII is to indicate whether the routing information is actually included after the forwarding indicator. For the first Baseband packet the RII packet is set e.g. = 1, indicating that the routing information is present. In the subsequent respectively Baseband packets the forwarding bit is set, the RII is cleared, e.g. = 0, indicating that no routing information is present. Then, the forwarding node E, and the master nodes F and J, use the latest received routing information to forward the subsequently received Baseband packets, until new routing information is received in a Baseband packet.

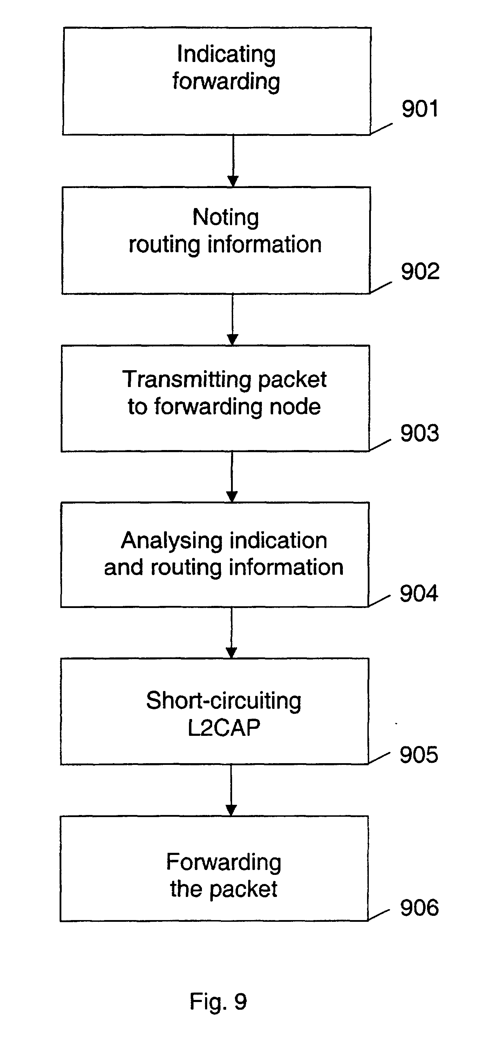

In Fig. 9 is a flowchart illustrating how a packet is routed from a first node A in a first piconet via a forwarding node E to a second node G in a second different piconet in the physical layer using the Bluetooth protocol of a Bluetooth network comprising multiple nodes. In block 901, the first node A indicates in a header of a Baseband packet that the packet should be forwarded. Thereafter, in block 902, the first node A inserts relevant information in the header of the Baseband packet. Then, in block 903, the first node transmits the packet using slave-to-slave communication to the forwarding node E. Thereafter, in block 904, the forwarding node E analyses the forwarding indication and the routing information of the received Baseband packet. Then, in block 905, the forwarding node E short-circuits the Logical Link Control and Adaptation Layer Protocol (L2CAP) layer of the packet. Finally, in block 906, the forwarding node E forwards the packet to the destination node, i.e. the second node G, according to the received routing information, using slave-to-slave communication.

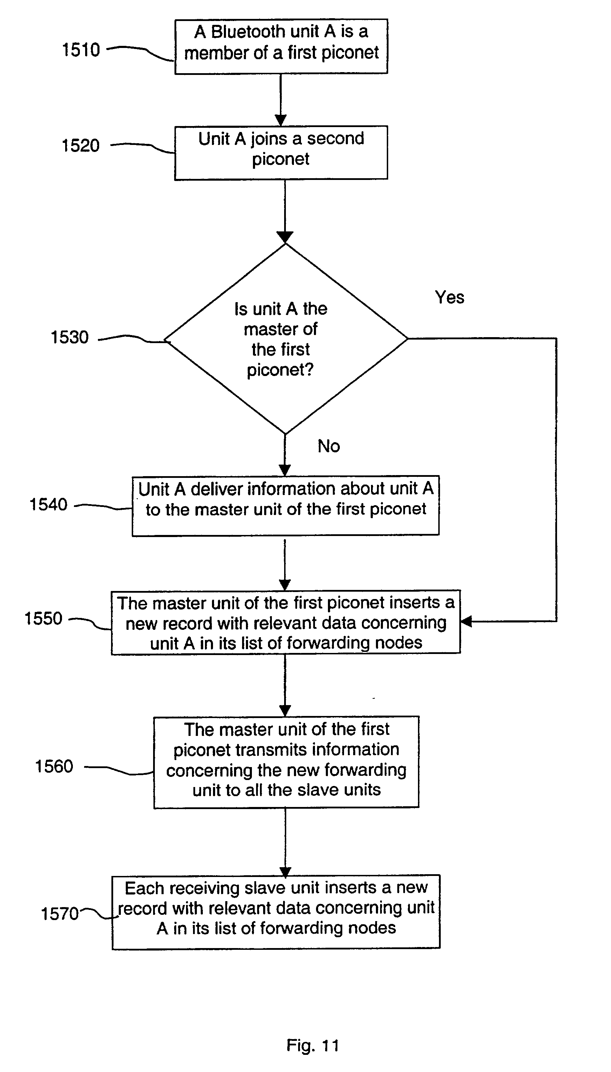

Now a process illustrating how a node becomes a forwarding node will be described. First, the information flow in the first piconet will be described with reference to the flowchart in Fig. 11. Two cases must be considered; the considered Bluetooth unit may be a slave unit or a master unit of the first piconet. In block 1510 a Bluetooth unit A is a member of a first piconet. Then, in block 1520, said unit A joins a second piconet using the INQUIRY and PAGE procedures, specified in the Bluetooth standard. In block 1530 it is checked whether the unit A is the master of the first piconet. If the unit A is the master of the first piconet, the flow proceeds directly to block 1550. If the unit A is not the master of the first piconet, the flow goes to block 1540. In block 1540 the unit A informs the master of the first piconet of its new forwarding node status, optionally including other information, such as the BD_ADDR of the master of the second piconet, the master clock value and scheduling parameters of the second piconet. Then, in block 1550 the master unit of the first piconet enters data concerning unit A in its list of forwarding nodes in the piconet, including e.g. the AM_ADDR and BD_ADDR of unit A and other optional information. Thereafter, in block 1560, the master unit of the first piconet transmits information about the new forwarding node, all the information being stored in the master unit, or a subset thereof, to the at least one of the slave units, except unit A, when unit A is a slave unit in the first piconet and unless the intra-piconet broadcast mechanism is used to convey the information. Finally, the flow goes to block 1570. In block 1570 each receiving slave unit inserts the received forwarding node information in its list of forwarding nodes in the piconet, of which the receiving slave unit is a member.

Now the information flow in the second piconet when a node becomes a forwarding node will be disclosed. There are two cases having two alternative ways to distribute information in the piconet, resulting in four different cases:
- The new unit is a slave in the second piconet
   Case 1: First the piconet member information is distributed, thereafter, the forwarding node information is distributed.
   Case 2: Piconet member information and forwarding node information are distributed together.
- The new unit is the master of the second piconet, i.e. the second piconet was just created.
   Case 3: First, the piconet member information is distributed, thereafter, the forwarding node information is distributed.
   Case 4: Piconet member information and forwarding node information are distributed together

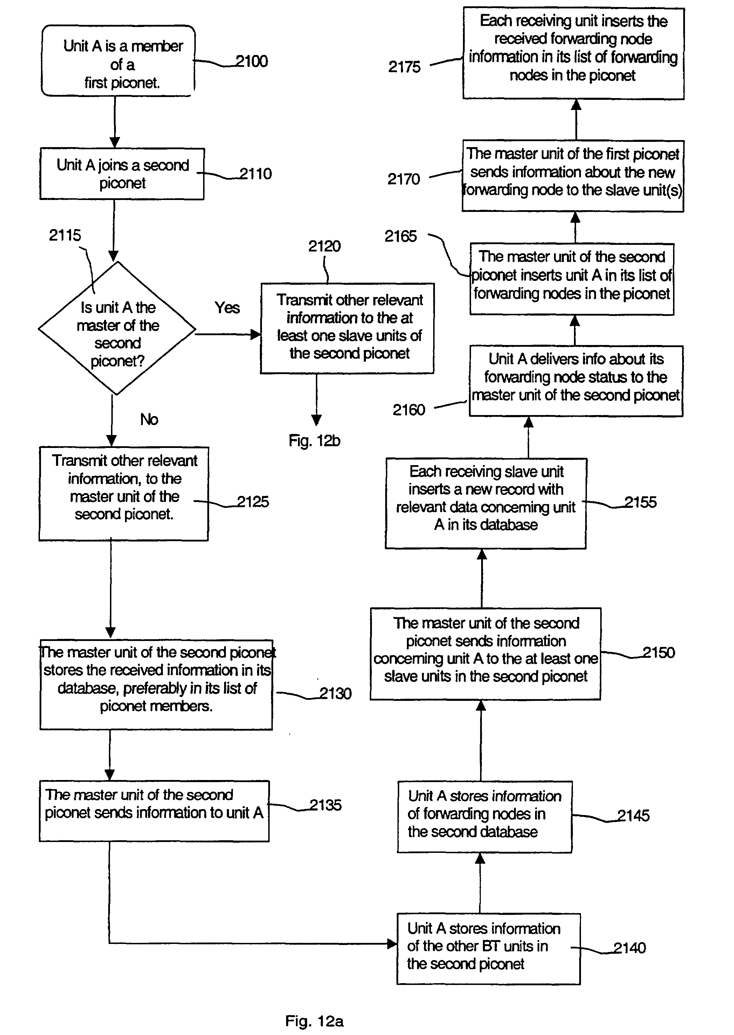

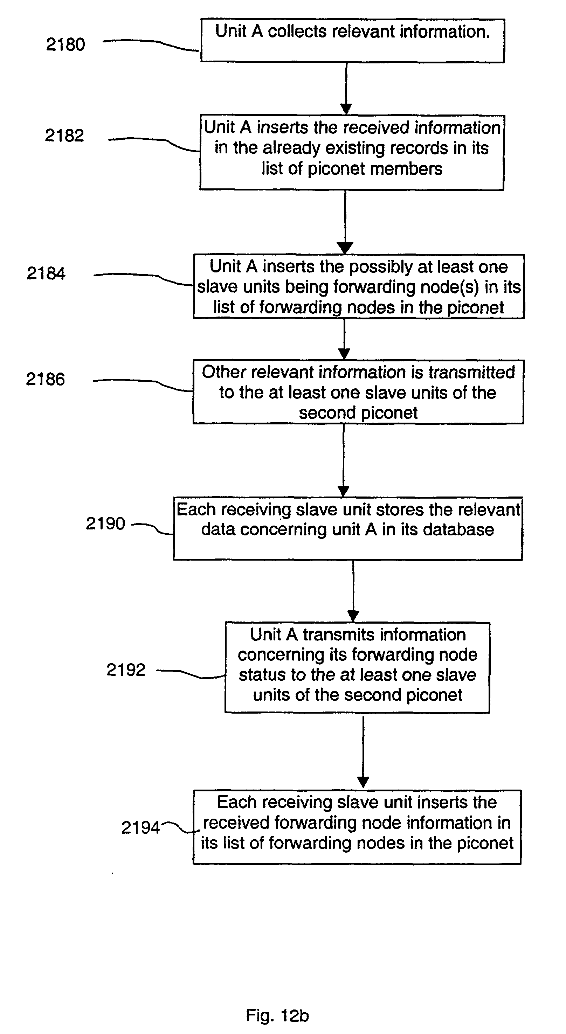

The cases 1 and 3 will now be disclosed with reference to the flowchart in Fig. 12a and Fig. 12b. In block 2100 of Fig. 12a, a Bluetooth unit A is a member of a first piconet. Then, in block 2110 the unit A joins a second piconet using the INQUIRY and PAGE procedures specified in the Bluetooth standard. In block 2115 it is determined whether the unit A is a master of the second piconet. If the unit A is the master of the second piconet, the BD_ADDR of unit A is already known to the at least one slave unit of the second piconet. Since unit A is the master unit, it has no AM_ADDR. Thus, when unit A is the master of the second piconet, the flow proceeds to block 2120, in which other relevant information, e.g. compatibility information such as a list of supported and unsupported features, IP address, etc. is transmitted to the at least one slave unit of the second piconet. Thereafter, the flow goes to Fig 12b, which will be discussed below. When the unit A is a slave unit of the second piconet, the flow goes from block 2115 to 2125. When the unit A is a slave unit of the second piconet, the BD_ADDR and the AM_ADDR of unit A is already known to the master of the second piconet. In block 2125, other relevant information, e.g. compatibility information such as a list of supported and unsupported features, IP address, etc. is transmitted from unit A to the master unit of the second piconet. Thereafter, the flow goes to block 2130. In block 2130 the master unit of the second piconet stores the received information in its database, preferably in its list of piconet members. Then, in block 2135 the master unit of the second piconet sends BD_ADDR and AM_ADDR of each of the other slave units in the second piconet, information which it has previously received from each of the other slave units in the second piconet, entirely or a subset thereof, and the corresponding information on the master unit of the second piconet, excluding BD_ADDR, which is already known to unit A, and the AM_ADDR, which does not exist, to unit A. Together with the above information, or as a separate transmission, the master of the second piconet also sends information about the forwarding nodes in the second piconet to unit A. Then, in block 2140 unit A inserts a new record having relevant data for each of the other slave units in the second piconet in its database, preferably in its list of piconet members. The received information about the master unit of the second piconet is also stored in the list of piconet members, or elsewhere in the database. Thereafter the flow go to block 2145 in which unit A inserts a new record having relevant data for each of the other forwarding nodes in the second piconet in its database, preferably in the list of forwarding nodes in the piconet, including in each record, e.g. BD_ADDR, and the AM_ADDR, when present, of the forwarding node and other optional information. Then, in block 2150 the master unit of the second piconet sends the BD_ADDR and the AM_ADDR of unit A and the information which it received from unit A, entirely or a subset thereof, to the other at least one slave unit in the second piconet, i.e. excluding unit A, unless the intra-piconet broadcast mechanism is used to convey the information. Thereafter the flow goes to block 2155 in which each receiving slave unit inserts a new record having relevant data concerning unit A in its database, preferably in its list of piconet members. Then, in block 2160 the unit A delivers information about its forwarding node status to the master unit of the second piconet. Thereafter, in block 2165 the master unit of the second piconet inserts a record concerning unit A in its list of forwarding nodes in the piconet, comprising e.g. the AM_ADDR and the BD_ADDR of unit A and other optional information. Then, in block 2170 the master unit of the first piconet transmits information concerning the new forwarding node, all the information stored in the master unit or a subset thereof, to the at least one slave unit, except unit A, when unit A is a slave unit of the first piconet, and unless the intra-piconet broadcast mechanism is used to convey information. Finally, in block 2175 each receiving slave unit inserts the received forwarding node information in its list of forwarding nodes in the piconet.

Fig. 12b discloses the continued information flow, after block 2120. The BD_ADDR and the AM_ADDR of each of the slave units in the second piconet is already known to unit A, since unit A is the master unit of the second piconet, and in a block 2180 unit A collects other information relevant to the slaves, if any, e.g. compatibility information, such as a list of supported and unsupported features. When a slave unit is a forwarding node, the forwarding node status and optional related information is also transferred to and collected by unit A. Then, in block 2182 unit A inserts the received information in the already existing records in its list of piconet members. Thereafter, in block 2184 unit A inserts information of each slave unit which is a forwarding node, in its list of forwarding nodes in the piconet, the information comprising e.g. AM_ADDR and the BD_ADDR and other optional information. The BD_ADDR of unit A is already known to the slave units of the second piconet and since unit A is the master unit, it has no AM_ADDR, but in the next block, other relevant information is transmitted to the at least one slave units of the second piconet, e.g. compatibility information, such as a list of supported and unsupported features, IP addresses, etc. Then in block 2190, each receiving slave unit stores the relevant data concerning unit A in its database, e.g. in its list of piconet members. Then, in block 2192, unit A sends information concerning its forwarding node status to the at least one slave units of the second piconet. Finally, in block 2194, each receiving slave unit inserts the received forwarding node information in its list of forwarding nodes in the piconet, including e.g. the BD_ADDR and other optional information.

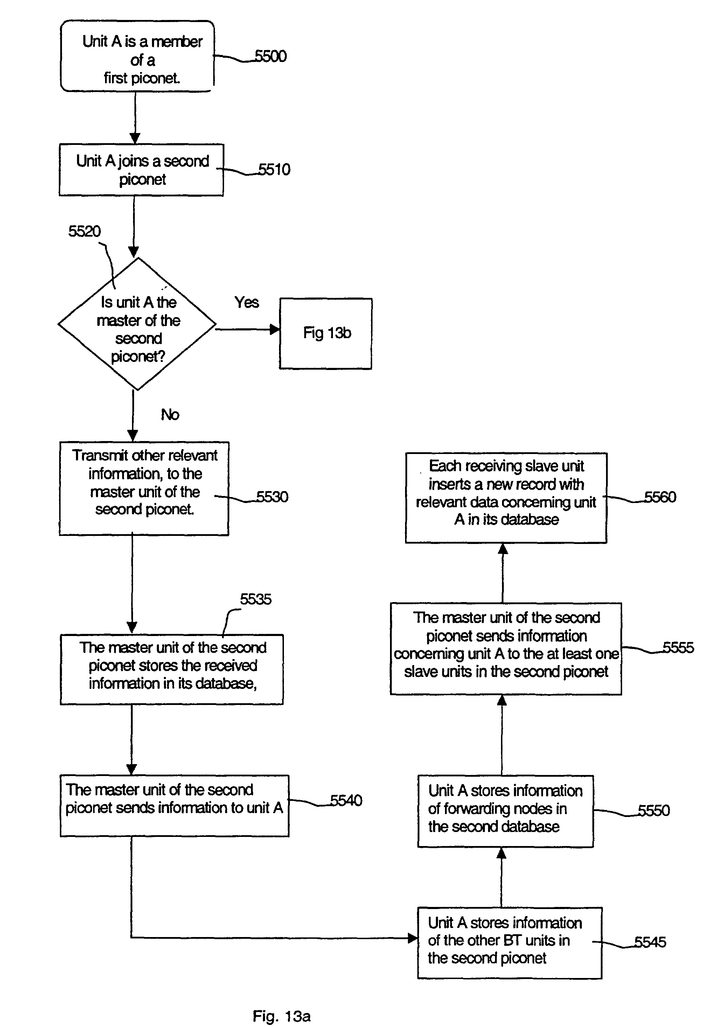

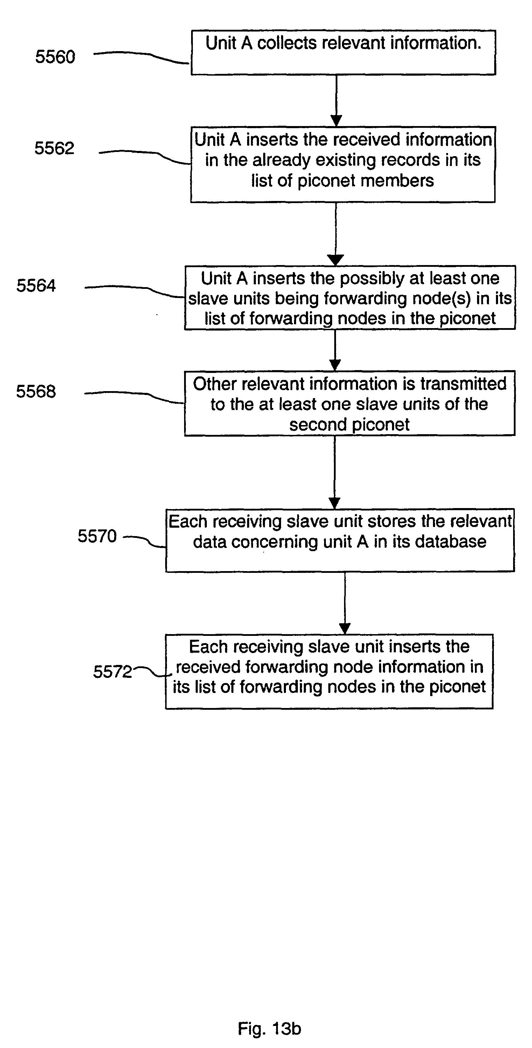

The cases 2 and 4 will now be discussed with reference to the flowchart in Fig. 13a and Fig. 13b. In block 5500, Fig. 13a, a Bluetooth unit A is a member of a first piconet. Then, in block 5510 said unit A joins a second piconet using the INQUIRY and PAGE procedures being specified in the Bluetooth specification. In block 5520 it is determined whether the unit A is a master of the second piconet. If the unit A is the master of the second piconet, the flow goes to Fig 13b, which will be discussed below. In the case where the unit A is a slave unit of the second piconet, the flow goes from block 5520 to 5530. When the unit A is a slave unit of the second piconet, the BD_ADDR and the AM_ADDR of unit A are already known to the master of the second piconet. In block 5530 other relevant information, e.g. compatibility information such as a list of supported and unsupported features, IP address, etc., is transmitted together with information concerning the forwarding node status of unit A, from unit A to the master unit of the second piconet. Thereafter, the flow goes to block 5535. In block 5535, the master unit of the second piconet stores the received information in its database. Preferably, part of the information, e.g. excluding the information concerning the forwarding status of unit A, is stored in the list of piconet members and the information concerning the forwarding node status of unit A, together with e.g. BD_ADDR and AM_ADDR of unit A is entered in the list of forwarding nodes. Then, in block 5540 the master unit of the second piconet sends BD_ADDR and AM_ADDR of each of the other slave units in the second piconet, the information which it has previously received from each of the other slave units in the second piconet, entirely or a subset thereof, and the corresponding information about the master unit of the second piconet, excluding BD_ADDR, which is already known to unit A, and the AM_ADDR, which does not exist, to unit A. Together with the above mentioned information, or as a separate transmission, the master of the second piconet also sends information about the forwarding nodes in the second piconet to unit A. Then, in block 5545 unit A inserts a new record having relevant data for each of the other slave units in the second piconet in its database, preferably in its list of piconet members. The received information about the master unit of the second piconet is also stored in the list of piconet members, or elsewhere in the database. Thereafter, the flow goes to block 5550, wherein unit A inserts a new record with relevant data for each of the other forwarding nodes in the second piconet in its database, preferably in the list of forwarding nodes in the piconet, including in each record, e.g. BD_ADDR, and the AM_ADDR, when present, of the forwarding node and other optional information. Then, in block 5555, the master unit of the second piconet sends the BD_ADDR and the AM_ADDR of unit A and the information which it received from unit A, entirely or a subset thereof, to the other at least one slave unit in the second piconet, i.e. excluding unit A unless the intra-piconet broadcast mechanism is used to convey the information. Finally, the flow go to block 5560, wherein each receiving slave unit stores all or parts of the received data in its database. Preferably part of the data, e.g. excluding the data concerning the forwarding node status of unit A, is inserted in the list of piconet members. The data concerning the forwarding node status of unit A, together with e.g. the BD_ADDR and AM_ADDR of unit A is inserted in the list of forwarding nodes.

Fig. 13b discloses the information flow, in the case where unit A is a master, after block 5520 in Fig 13a. The BD_ADDR and the AM_ADDR of each of the slave units in the second piconet are already known to unit A, since unit A is the master unit of the second piconet. Thus, in block 5560, unit A collects other relevant information, if any, e.g. compatibility information, such as a list of supported and unsupported features. When a slave unit is a forwarding node, the forwarding node status and optional related information is also transferred to unit A. Then in block 5562, unit A inserts the received information in the already existing records in its list of piconet members. Thereafter, in block 5564, unit A inserts information of the possibly at least one slave units being forwarding nodes in its list of forwarding nodes in the piconet, comprising e.g. AM_ADDR and the BD_ADDR and other optional information. The BD_ADDR of unit A is already known to the slave units of the second piconet and since unit A is the master unit, it has no AM_ADDR. Thus, in block 5560 other relevant information is transmitted to the at least one slave unit of the second piconet, e.g. compatibility information, such as list of supported and unsupported features, IP address, etc. Then in block 5570, each receiving slave unit stores the relevant data concerning unit A in its database, e.g. in its list of piconet members. Then, in block 5572, each receiving slave unit inserts the received forwarding node information in its list of forwarding nodes in the piconet, including e.g. the BD_ADDR and other optional information.

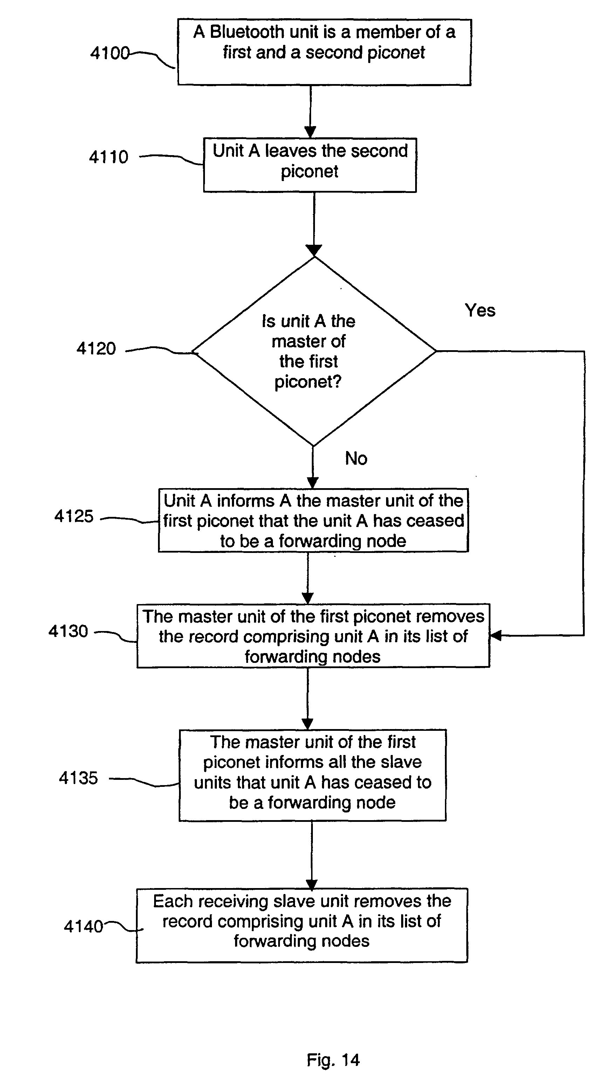

The scenario when a Bluetooth unit ceases to be a forwarding node will now be considered. A Bluetooth unit A is assumed to be a member of a first and a second piconet and thus constitutes a forwarding node in both piconets. Unit A then leaves the second piconet. Fig. 14 is a flowchart illustrating the information flow in the first piconet when a unit A ceases to be a forwarding node. There are two cases to consider:
- Unit A is a slave unit in the first piconet
- Unit A is the master of the first piconet

In Fig 14, as stated in block 4100, unit A is a member of a first and a second piconet. Then, the flow goes to block 4110, wherein the unit A leaves the second piconet, in accordance with known procedures specified in the Bluetooth standard, either explicitly, by sending or receiving the LMP PDU LMP_detach, or implicitly by connection time-out due to loss of radio contact. Then in block 4120, it is decided whether the unit A is the master of the first piconet. If unit A is the master the flow goes to block 4130. If the unit A is a slave unit in the first piconet, the unit A sends a message to the master unit of the first piconet, indicating that unit A is no longer a forwarding node. If unit A is present in its own list of forwarding nodes, then the record comprising unit A is removed from this list. Then, in block 4130, the master unit of the first piconet removes the record comprising unit A from its list of forwarding nodes. Thereafter, in block 4135, the master unit of the first piconet informs the at least one slave units of the first piconet, excluding A when unit A is a slave unit of the first piconet and unless the intra-piconet broadcast mechanism is used to convey the information, that unit A has ceased to be a forwarding node. Finally, in block 4140, each receiving slave unit removes the record comprising unit A from its list of forwarding nodes.

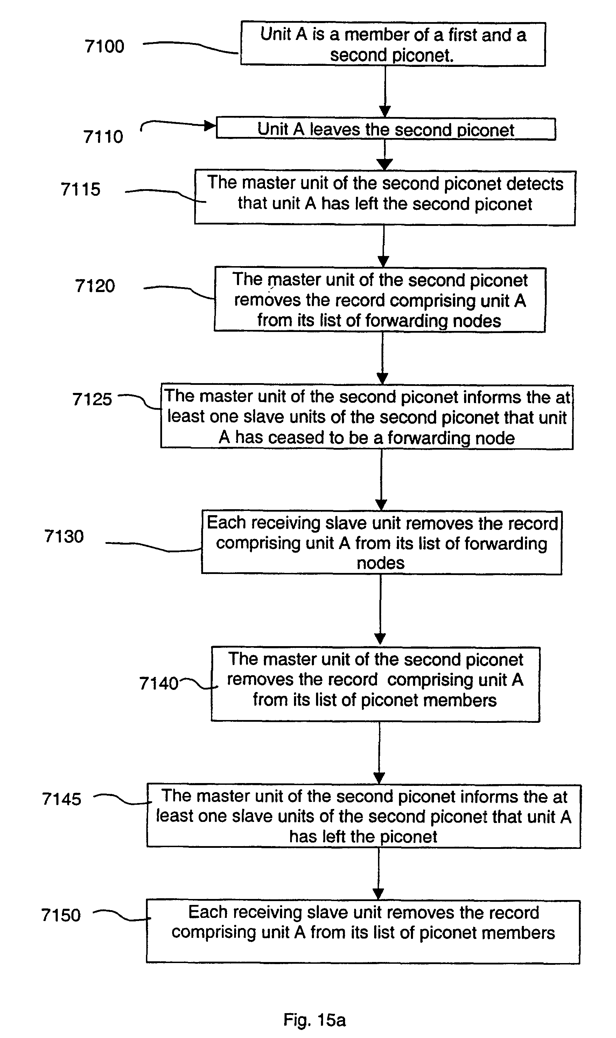

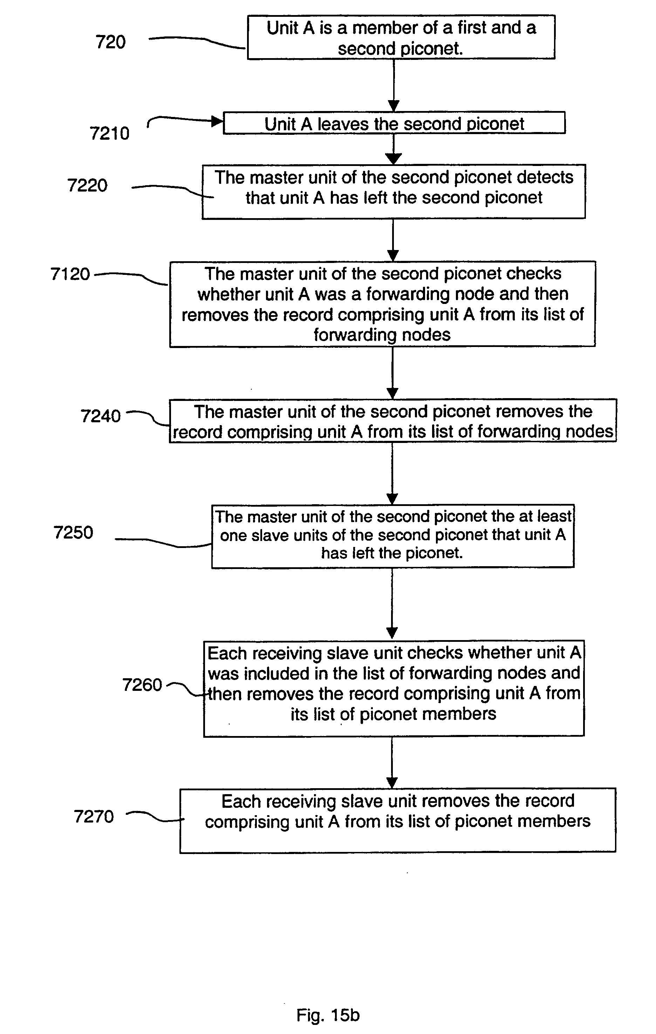

Now the information flow when a Bluetooth unit ceases to be a forwarding node in the second piconet will be disclosed with reference to Figs. 15a and 15b. There are two cases to be considered:
- Case 1: First, the indication that unit A has ceased to be a forwarding node is distributed, thereafter the indication that unit A has left piconet is distributed.
- Case 2: Only the indication that unit A has ceased to be a forwarding node is distributed. The fact that unit A can no longer be a forwarding node in the piconet is assumed implicitly.

The trivial cases, where unit A is the master of the second piconet, in which case the second piconet breaks down when the master unit leaves, and where the second piconet comprises only one unit apart from unit A, in which case there are no other units to which information is to be distributed are not described in detail.

Now, the first case will be described with reference to Fig. 15a. First, as stated in block 7100, a unit A is assumed to be a member of a first and a second piconet, the unit A being a slave unit in the second piconet. Then, in block 7110, the unit A leaves the second piconet, in accordance with procedures specified in the Bluetooth standard, either explicitly, by sending or receiving the LMP PDU LMP_detach, or implicitly by connection time-out due to loss of radio contact. Thereafter, in block 7115, the master unit of the second piconet detects that the unit A has left the second piconet, using known mechanism specified in the Bluetooth standard. Then, in block 7120, the master unit of the second piconet removes the record comprising unit A from its list of forwarding nodes. In block 7125, the master unit of the second piconet informs the at least one slave unit of the second piconet that unit A has ceased to be a forwarding node. Then, in block 7130, each slave unit removes the record comprising unit A from its list of forwarding nodes. In block 7140, the master unit of the second piconet removes the record comprising unit A from its list of piconet members. Thereafter, in block 7145, the master unit of the second piconet informs the at least one slave unit of the second piconet that unit A has left the piconet. Finally, in block 7150, each receiving slave unit removes the record comprising the unit A from its list of piconet members.

Now, the second case will be disclosed with reference to Fig. 15b. First, in block 7200, a unit A is a member of a first and a second piconet, the unit A being a slave unit in the second piconet. Then, in block 7210, the unit A leaves the second piconet, in accordance with procedures specified in the Bluetooth standard, either explicitly, by sending or receiving the LMP PDU LMP_detach, or implicitly by connection time-out due to loss of radio contact. Thereafter, in block 7220, the master unit of the second piconet detects that the unit A has left the second piconet, using known mechanism specified in the Bluetooth standard. Then, in block 7230, the master unit of the second piconet checks whether unit A was included in the list of forwarding nodes and removes the record comprising unit A from its list of forwarding nodes. In block 7240, the master unit of the second piconet removes the record comprising unit A from its list of piconet members. In block 7250, the master unit of the second piconet informs the at least one slave units of the second piconet that unit A has left the piconet. In block 7260, each receiving slave unit checks whether unit A was included in the list of forwarding nodes and then removes the record comprising unit A from its list of forwarding nodes. Finally, in block 7270, each receiving slave unit removes the record comprising unit A from its list of piconet members.

The invention being thus described, it will be obvious that the same may be varied in many ways. Such variations and all such modifications as would be obvious to one skilled in the art are intended to be included within the scope of the following claims.

## Claims

1. A digital communication (601) system comprising nodes (A, B, C, D, E, F), the nodes including a central (F) node and at least two peripheral nodes (A, B), the central node comprising all means for the communication in the system and a memory (1180) for storing information related to the system itself and/or the individual nodes, the nodes each comprising a transmitter and a receiver (1150), and information only being directly transferred between the central node and each of the peripheral nodes, **characterized by** control means in the central node (1150) for transferring information stored in the memory means related to the system and/or the individual nodes to every peripheral node.

2. A digital communication system according to claim 1, **characterized in that** each peripheral node comprises means for storing said information.

3. A digital communication system according to claim 1, **characterized in that** the direct transferring of information is made wireless, in particular using short range radio waves.

4. A digital communication system according to claim 1, **characterized in that** the control means in the central node are arranged to transfer address information comprising at least one address of each of the peripheral nodes.

5. A digital communication system according to claim 1, **characterized in that** the control means in the central node are arranged to transfer compatibility related information.

6. A digital communication system according to claim 1, **characterized in that** the system is a Bluetooth piconet.

7. A digital communication system according to claim 1, **characterized in that** a first one of the nodes is a central node of a first group of the nodes and a second one of the nodes is a central node of a second group of the nodes, the first and second nodes being different nodes and the nodes being capable of being members in both the first and second group, each node having first memory means for storing information relating to information on the first one of the nodes and on the nodes of the first group and second memory means for storing information relating to information on the second one of the nodes and on the nodes of the second group.

8. A digital communication system according to claim 7, **characterized in that** the nodes have control units connected to the transmitters and receivers for transferring to a central node information on a change of a node to being or to finishing being a member in both the first and second groups.

9. A method in a digital communication system (601) comprising nodes (A, B, C, D, E, F), the nodes including a central node (F) and at least two peripheral nodes (A, B), information only being directly transferred between the central node and each of the peripheral nodes, the central node controlling all the communication in the system, and information related to the system itself and/or the individual nodes being stored in the central node (1180), **characterized in that** information stored in the central node and related to the system and/or the nodes is transferred from the central node to every peripheral node.

10. A method according to claim 9, **characterized in that** part of said information transferred to every peripheral node is derived from information conveyed from the peripheral nodes to the central node when requested by the central node.

11. A method according to claim 9, **characterized in that** part of said information transferred to every peripheral node is derived from information conveyed from the peripheral nodes to the central node initiated by the peripheral nodes in particular triggered by an event in the respective peripheral node.

12. A method according to claim 9, **characterized in that** said information is, entirely or in part, address information comprising an address of each of the peripheral nodes.

13. A method according to claim 9, **characterized in that** said information is, entirely or in part, compatibility related information.

14. A method according to claim 9, **characterized in that** all direct transfer of information is made wirelessly, in particular using short range radio waves.

15. A method according to claim 9, **characterized in that** the digital communication system is a Bluetooth piconet.

16. A method according to any of claim 9-15, **characterized in that** the transferring of said information is performed using a Bluetooth broadcast mechanism.

17. A method according to any of claim 9-15, **characterized in that** the transferring of said information is performed using the Bluetooth unicast system to each peripheral node in turn.

18. A method according to any of claim 9-17, **characterized in that** the transferring of said information is made using the Bluetooth LMP protocol.

19. A method according to any of claim 9-17, **characterized in that** the transferring of said information is made using a protocol layer between the L2CAP and the network layer, said protocol layer emulating a shared medium network towards the network layer.

20. A method according to any of claim 13-19, **characterized in that** the transferring of said information is made when a new peripheral node joins the digital communication system.

21. A method according to any of claim 13-20, **characterized in that**, when a new peripheral node joins the system, the part of said information related to all the other peripheral nodes is transferred from the central node to said new peripheral node.

22. A method according to any of claim 9-20, **characterized in that** a message is transferred from the central node to all the peripheral nodes when one of the peripheral nodes has left the system.

23. A method according to claim 9, wherein a first one of the nodes is a master node of a first group of the nodes, a second one of the nodes is a master node of a second group of the nodes, the first and second ones of the nodes being different nodes and the group of first nodes and the group of second nodes together with the second one of the nodes having a node in common, this node being a forwarding node, **characterized in that** when a node changes from being a forwarding node to not being a forwarding node, or vice versa, a message is sent to all the nodes in the first and second groups except the node itself.

24. A method according to claim 23, **characterized in that** the message is sent from the master nodes of the first and second groups.

25. A method according to claim 23, **characterized in that** the message is sent from the node itself.

26. A method according to claim 23, **characterized in that** before sending the message, information of the change of forwarding node status in the node is transferred from the node to the master node of the first group, and to the master node of the second group, provided that the node is not the master node of the second group.

## Patentansprüche

1. Digitalkommunikationssystem (601), die Knoten (A, B, C, D, E, F) umfassend, wobei die Knoten (A, B, C, D, E, F) einen Zentralknoten (F) und mindestens zwei periphere Knoten (A, B) einschließen, der Zentralknoten alle Vorrichtungen für die Kommunikation in dem System umfasst und einen Speicher (1180) zum Speichern von das System selbst und/oder die individuellen Knoten betreffender Information, wobei jeder der Knoten einen Sender umfasst und einen Empfänger (11 ), und Information nur direkt übertragen wird zwischen dem Zentralknoten und jedem der peripheren Knoten, **gekennzeichnet durch** eine Steuervorrichtung in dem Zentralknoten (11 ) zum Übertragen von in der dem System und/oder den individuellen Knoten zugeordneten Speichervorrichtung für jeden peripheren Knoten.

2. Digitalkommunikationssystem nach Anspruch 1, **dadurch gekennzeichnet, dass** jeder periphere Knoten eine Vorrichtung umfasst zum Speichern der Information.

3. Digitalkommunikationssystem nach Anspruch 1, **dadurch gekennzeichnet, dass** das direkte Übertragen von Information drahtlos ausgeführt wird, insbesondere unter Verwendung von Kurzbereichsfunkwellen.

4. Digitalkommunikationssystem nach Anspruch 1, **dadurch gekennzeichnet, dass** die Steuervorrichtung in dem Zentralknoten eingerichtet ist zum Übertragen von mindestens eine Adresse jedes peripheren Knoten umfassender Adressinformation.

5. Digitalkommunikationssystem nach Anspruch 1, **dadurch gekennzeichnet, dass** die Steuervorrichtung in dem Zentralknoten eingerichtet ist zum Übertragen von kompatibilitätsbezogener Information.

6. Digitalkommunikationssystem nach Anspruch 1, **dadurch gekennzeichnet, dass** das System ein Bluetooth-Pikonetz ist.

7. Digitalkommunikationssystem nach Anspruch 1, **dadurch gekennzeichnet, dass** ein erster der Knoten ein Zentralknoten einer ersten Gruppe von Knoten ist und ein zweiter der Knoten ein Zentralknoten einer zweiten Gruppe von Knoten ist, die ersten und zweiten Knoten unterschiedliche Knoten sind und die Knoten imstande sind, Mitglied in sowohl der ersten als auch der zweiten Gruppe zu sein, wobei jeder Knoten eine erste Speichervorrichtung hat zum Speichern von Information in Bezug auf Information über den ersten der Knoten und die Knoten der ersten Gruppe und eine zweite Speichervorrichtung zum Speichern von Information in Bezug auf Information über den zweiten der Knoten und die Knoten der zweiten Gruppe.

8. Digitalkommunikationssystem nach Anspruch 7, **dadurch gekennzeichnet, dass** die Knoten mit den Sendern und Empfängern verbundene Steuereinheiten haben zum Übertragen von Information zu einem Zentralknoten auf eine Änderung eines Knotens dahingehend, dass er sowohl in der ersten als auch der zweiten Gruppe ein Mitglied ist oder die Mitgliedschaft beendet.

9. Verfahren in einem Digitalkommunikationssystem (601), welches Knoten (A, B, C, D, E, F) umfasst, wobei die Knoten einen Zentralknoten (F) und mindestens zwei periphere Knoten (A, B) einschließen, wobei Information nur direkt zwischen dem Zentralknoten und jedem der peripheren Knoten übertragen wird, der Zentralknoten die gesamte Kommunikation in dem System steuert und das System selbst und/oder die individuellen Knoten betreffende Information in dem Zentralknoten gespeichert ist (1180), **dadurch gekennzeichnet, dass** in dem Zentralknoten gespeicherte Information in Bezug auf das System und/oder die Knoten von dem Zentralknoten zu jedem peripheren Knoten übertragen wird.

10. Verfahren nach Anspruch 9, **dadurch gekennzeichnet, dass** ein Teil der zu jedem peripheren Knoten übertragenen Information von Information hergeleitet wird, die auf Anfrage des Zentralknotens von den peripheren Knoten dem Zentralknoten zugeführt wird.

11. Verfahren nach Anspruch 9, **dadurch gekennzeichnet, dass** ein Teil der zu jedem peripheren Knoten übertragene Information von Information hergeleitet wird, die von den peripheren Knoten dem Zentralknoten zugeführt wird, veranlasst durch die peripheren Knoten, insbesondere ausgelöst durch ein Ereignis in dem jeweiligen peripheren Knoten.

12. Verfahren nach Anspruch 9, **dadurch gekennzeichnet, dass** die Information insgesamt oder teilweise Adressinformation ist, die eine Adresse jedes der peripheren Knoten umfasst.

13. Verfahren nach Anspruch 9, **dadurch gekennzeichnet, dass** die Information insgesamt oder teilweise kompatibilitätsbezogene Information ist.

14. Verfahren nach Anspruch 9, **dadurch gekennzeichnet, dass** die gesamte direkte Übertragung von Information drahtlos ausgeführt wird, insbesondere unter Verwendung von Kurzbereichsfunkwellen.

15. Verfahren nach Anspruch 9, **dadurch gekennzeichnet, dass** das Digitalkommunikationssystem ein Bluetooth-Pikonetz ist.

16. Verfahren nach einem der Ansprüche 9-15, **dadurch gekennzeichnet, dass** die Übertragung der Information unter Verwendung eines Bluetooth-Rundsendemechanismus ausgeführt wird.

17. Verfahren nach einem der Ansprüche 9-15, **dadurch gekennzeichnet, dass** die Übertragung der Information unter wechselweiser Verwendung des Bluetooth-Unicast-Systems zu jedem Peripherieknoten ausgeführt wird.

18. Verfahren nach einem der Ansprüche 9-17, **dadurch gekennzeichnet, dass** die Übertragung der Information unter Verwendung des Bluetooth-LMP-Protokolls ausgeführt wird.

19. Verfahren nach einem der Ansprüche 9-17, **dadurch gekennzeichnet, dass** das Übertragen der Information unter Verwendung einer Protokollschicht zwischen der L2CAP- und der Netzwerkschicht ausgeführt wird, wobei die Protokollschicht ein Netz geteilter Medien in Richtung der Netzschicht emuliert.

20. Verfahren nach einem der Ansprüche 13-19, **dadurch gekennzeichnet, dass** das Übertragen der Information ausgeführt wird, wenn ein neuer peripherer Knoten zu dem Digitalkommunikationssystem hinzu kommt.

21. Verfahren nach einem der Ansprüche 13-20, **dadurch gekennzeichnet, dass** wenn ein neuer peripherer Knoten zu dem System hinzu kommt, der Teil der alle der anderen peripheren Knoten betreffenden Information von dem Zentralknoten zu dem neuen Peripherieknoten übertragen wird.

22. Verfahren nach einem der Ansprüche 9-20, **dadurch gekennzeichnet, dass** eine Meldung von dem zentralen Knoten zu allen peripheren Knoten übertragen wird, wenn einer der peripheren Knoten das System verlassen hat.

23. Verfahren nach Anspruch 9, wobei ein erster der Knoten ein Haupt-Knoten der ersten Gruppe der Knoten ist, ein zweiter der Knoten ein Haupt-Knoten einer zweiten Gruppe der Gruppen ist, die ersten und zweiten der Knoten unterschiedliche Knoten sind und die Gruppe der ersten Knoten und die Gruppe der zweiten Knoten gemeinsam mit dem zweiten der Knoten einen gemeinsamen Knoten haben, und dieser Knoten ein Weiterleitungsknoten ist, **dadurch gekennzeichnet, dass** wenn ein Knoten seinen Zustand, ein Weiterleitungsknoten zu sein, ändert in einen Zustand, kein Weiterleitungsknoten zu sein oder umgekehrt, eine Meldung an alle Knoten in den ersten und zweiten Gruppen gesendet wird mit Ausnahme des Knotens selbst.

24. Verfahren nach Anspruch 23, **dadurch gekennzeichnet, dass** die Meldung in den Haupt-Knoten der ersten und zweiten Gruppen gesendet wird.

25. Verfahren nach Anspruch 23, **dadurch gekennzeichnet, dass** die Meldung von dem Knoten selbst gesendet wird.

26. Verfahren nach Anspruch 23, **dadurch gekennzeichnet, dass** vor dem Senden der Meldung eine Information bezüglich der Änderung des Weiterleitungsknotenzustandes in dem Knoten von dem Knoten zu dem Haupt-Knoten der ersten Gruppe übertragen wird und zu dem Haupt-Knoten der zweiten Gruppe, vorausgesetzt, dass der Knoten nicht der Hauptknoten der zweiten Gruppe ist.

## Revendications

1. Système de communication numérique (601) comprenant des noeuds (A, B, C, D, E, F), les noeuds (A, B, C, D, E, F) incluant un noeud central (F) et au moins deux noeuds périphériques (A, B), le noeud central comprenant tous les moyens pour la communication dans le système et une mémoire (1180) pour stocker de l'information concernant le système lui-même et/ou les noeuds individuels, chacun des noeuds comprenant un émetteur et un récepteur (1150), et de l'information seulement étant directement transférée entre le noeud central et chacun des noeuds périphériques, **caractérisé par** des moyens de commande dans le noeud central (1150) pour transférer vers chaque noeud périphérique de l'information stockée dans les moyens de mémoire, concernant le système et/ou les noeuds individuels.

2. Système de communication numérique selon la revendication 1, **caractérisé en ce que** chaque noeud périphérique comprend des moyens pour stocker ladite information.

3. Système de communication numérique selon la revendication 1, **caractérisé en ce que** le transfert direct d'information est effectué sans fil, en particulier en utilisant des ondes radio à courte portée.

4. Système de communication numérique selon la revendication 1, caractérisé en que les moyens de commande dans le noeud central sont arrangés pour transférer de l'information d'adresse comprenant au moins une adresse de chacun des noeuds périphériques.

5. Système de communication numérique selon la revendication 1, **caractérisé en ce que** les moyens de commande dans le noeud central sont arrangés pour transférer une information liée à la compatibilité.

6. Système de communication numérique selon la revendication 1, **caractérisé en ce que** le système est un pico-réseau Bluetooth.

7. Système de communication numérique selon la revendication 1, **caractérisé en ce qu'**un premier des noeuds est un noeud central d'un premier groupe des noeuds, et un second des noeuds est un noeud central d'un second groupe des noeuds, les premier et second noeuds étant des noeuds différents, et les noeuds étant capables d'être des membres à la fois du premier groupe et du second groupe, chaque noeud ayant des premiers moyens de mémoire pour stocker de l'information concernant de l'information sur le premier des noeuds et sur les noeuds du premier groupe, et des seconds moyens de mémoire pour stocker de l'information concernant de l'information sur le second des noeuds et sur les noeuds du second groupe.

8. Système de communication numérique selon la revendication 7, **caractérisé en ce que** les noeuds ont des unités de commande connectées aux émetteurs et aux récepteurs pour transférer vers un noeud central de l'information portant sur un changement d'un noeud pour être ou pour cesser d'être un membre à la fois des premier et second groupes.

9. Procédé dans un système de communication numérique (601) comprenant des noeuds (A, B, C, D, E, F), les noeuds incluant un noeud central (F) et au moins deux noeuds périphériques (A, B), de l'information seulement étant directement transférée entre le noeud central et chacun des noeuds périphériques, le noeud central commandant toute la communication dans le système, et de l'information concernant le système lui-même et/ou les noeuds individuels étant stockée dans le noeud central (1180), **caractérisé en ce que** l'information stockée dans le noeud central et concernant le système et/ou les noeuds est transférée à partir du noeud central vers chaque noeud périphérique.

10. Procédé selon la revendication 9, **caractérisé en ce qu'**une partie de l'information transférée vers chaque noeud périphérique est obtenue à partir d'une information transmise des noeuds périphériques vers le noeud central à la demande du noeud central.

11. Procédé selon la revendication 9, **caractérisé en ce qu'**une partie de l'information transférée vers chaque noeud périphérique est obtenue à partir de l'information transmise des noeuds périphériques vers le noeud central à l'initiative des noeuds périphériques, en particulier sous l'effet du déclenchement par un événement dans le noeud périphérique respectif.

12. Procédé selon la revendication 9, **caractérisé en ce que** ladite information est, entièrement ou en partie, de l'information d'adresse comprenant une adresse de chacun des noeuds périphériques.

13. Procédé selon la revendication 9, **caractérisé en ce que** ladite information est, entièrement ou en partie, de l'information liée à la compatibilité.

14. Procédé selon la revendication 9, **caractérisé en ce que** tout transfert d'information direct est effectué sans fil, en particulier en utilisant des ondes de radio de courte portée.

15. Procédé selon la revendication 9, **caractérisé en ce que** le système de communication numérique est un pico-réseau Bluetooth.

16. Procédé selon l'une quelconque des revendications 9-15, **caractérisé en ce que** le transfert de ladite information est effectué en utilisant un mécanisme de diffusion Bluetooth.

17. Procédé selon l'une quelconque des revendications 9-15, **caractérisé en ce que** le transfert de ladite information est effectué en utilisant le système de diffusion individuelle Bluetooth, tour à tour vers chaque noeud périphérique.

18. Procédé selon l'une quelconque des revendications 9-17, **caractérisé en ce que** le transfert de ladite information est effectué en utilisant le protocole LMP de Bluetooth.

19. Procédé selon l'une quelconque des revendications 9-17, **caractérisé en ce que** le transfert de ladite information est effectué en utilisant une couche de protocole entre le protocole L2CAP et la couche de réseau, cette couche de protocole émulant un réseau à support partagé, vers la couche de réseau.

20. Procédé selon l'une quelconque des revendications 13-19, **caractérisé en ce que** le transfert de ladite information est effectué lorsqu'un nouveau noeud périphérique se joint au système de communication numérique.

21. Procédé selon l'une quelconque des revendications 13-20, **caractérisé en ce que**, lorsqu'un nouveau noeud périphérique se joint au système, la partie de ladite information concernant tous les autres noeuds périphériques est transférée du noeud central vers le nouveau noeud périphérique.

22. Procédé selon l'une quelconque des revendications 9-20, **caractérisé en ce qu'**un message est transféré du noeud central vers tous les noeuds périphériques lorsqu'un des noeuds périphériques a quitté le système.

23. Procédé selon la revendication 9, dans lequel un premier des noeuds est un noeud maître d'un premier groupe des noeuds, un second des noeuds est un noeud maître d'un second groupe des noeuds, les premier et second des noeuds étant des noeuds différents, et le groupe de premiers noeuds et le groupe de seconds noeuds conjointement au second des noeuds ayant un noeud en commun, ce noeud étant un noeud de transit, **caractérisé en ce que** lorsqu'un noeud change en passant de l'état de noeud de transit à un état qui n'est pas un noeud de transit, ou inversement, un message est envoyé à tous les noeuds dans les premier et second groupes, à l'exception du noeud lui-même.

24. Procédé selon la revendication 23, **caractérisé en ce que** le message est envoyé par les noeuds maîtres des premier et second groupes.

25. Procédé selon la revendication 23, **caractérisé en ce que** le message est envoyé par le noeud lui-même.

26. Procédé selon la revendication 23, **caractérisé en ce qu'**avant d'envoyer le message, de l'information concernant le changement de l'état de noeud de transit dans le noeud est transférée du noeud vers le noeud maître du premier groupe, et vers le noeud maître du second groupe, à condition que le noeud ne soit pas le noeud maître du second groupe.
